# EUROPÄISCHE PATENTSCHRIFT

(11) **EP 4 347 336 B1**
(45) Veröffentlichungstag und Bekanntmachung des Hinweises auf die Patenterteilung: **09.07.2025**
(21) Anmeldenummer: 22730178.5
(22) Anmeldetag: 20.05.2022
(51) Int. Cl.: B60T 13/66, B60T 13/68, B60T 8/32, B60T 8/88, B60T 17/22

(54) **ELEKTRO-PNEUMATISCHE AUSRÜSTUNG EINES FAHRZEUGS MIT VORSORGLICH MIT BACKUP-DRUCK VERSORGTEM AUTONOMEN BREMSKREIS**
ELECTROPNEUMATIC EQUIPMENT FOR A VEHICLE WITH AN AUTONOMOUS BRAKE CIRCUIT SUPPLIED WITH BACKUP PRESSURE AS A PRECAUTION
ÉQUIPEMENT ÉLECTROPNEUMATIQUE D'UN VÉHICULE COMPRENANT UN SYSTÈME DE FREINAGE AUTONOME ALIMENTÉ PAR PRÉCAUTION AVEC UNE PRESSION DE SECOURS

(30) Priorität: 31.05.2021 DE 102021114055
(43) Veröffentlichungstag der Anmeldung: 10.04.2024
(73) Patentinhaber: KNORR-BREMSE Systeme für Nutzfahrzeuge GmbH, 80809 München (DE)
(72) Erfinder: JUNDT, Oliver, 74394 Hessigheim (DE); HECKER, Falk, 71706 Markgröningen (DE); LEIBBRAND, Jonas, 71735 Eberdingen-Nußdorf (DE); HUMMEL, Stefan, 70191 Stuttgart (DE)
(86) Internationale Anmeldenummer: PCT/EP2022/063727
(87) Internationale Veröffentlichungsnummer: WO 2022/253594

(56) Entgegenhaltungen:
- EP-A1- 3 421 309
- EP-B1- 2 090 481
- DE-A1- 102014 112 015
- DE-A1- 102017 113 336
- DE-A1- 102018 219 378

## Beschreibung

Die vorliegende Erfindung bezieht sich auf eine elektrische Ausrüstung eines Fahrzeugs, insbesondere eines als Zugfahrzeug-Anhängerkombination ausgebildeten Fahrzeugs, gemäß dem Oberbegriff von Anspruch 1 sowie auf ein Fahrzeug mit einer solchen elektrischen Ausrüstung nach Anspruch 23.

Fahrzeuge mit (teil-)automatisierten Fahrfunktionen, die dem Fahrer die Führungsaufgabe und -verantwortung zumindest für eine begrenzte Zeit abnehmen, also beispielsweise autonom betrieben werden können, müssen bei Auftreten eines beliebigen Fehlers die Fahrzeugführung solange fortsetzen können, bis der Fahrer die Fahrzeugführung wieder übernimmt.

Die daraus abgeleitete Systemeigenschaft "Fail-Operational" erfordert, dass die Grundfunktionen des Fahrzeugs insbesondere auf der Ausführungsebene weiterhin, zumindest mit funktionalen Einschränkungen, gewährleistet sind. Für die Bremssteuerung im autonomen Fahrbetrieb bedeutet das, dass bei Auftreten eines beliebigen Fehlers die elektropneumatische Betriebsbremseinrichtung weiterhin elektronisch gesteuert betrieben werden können muss, so dass auch fahrdynamische Regelfunktionen, wie beispielsweise ABS, ASR, ESP weiterhin, wenn auch möglicherweise mit Einschränkungen, umgesetzt werden können.

Eine Redundanz sämtlicher Komponenten der elektropneumatischen Betriebsbremseinrichtung zur Ausbildung einer vollständigen Redundanz ist zwar hinsichtlich der Erhaltung der Funktionalität auch bei Auftreten eines Fehlers zielführend, jedoch hinsichtlich Kosten, Bauraum und Gewicht insbesondere in der Serienfertigung nicht zu vertreten.

EP 3 421 309 A1 offenbart eine druckmittelbetätigte Bremsvorrichtung mit zwei Steuereinrichtungen, wobei bei einem Ausfall der einen Steuereinrichtung die andere Steuereinrichtung zwei Drucksteuerventile in Abhängigkeit von Raddrehzahlsignalen ansteuert, um ein ABS oder ESP zu realisieren. EP 2 090 481 B1 beschreibt ein EBS mit redundanter Steuerung der Bremsaktuatoren und DE 10 2017 113 336 A1 eine elektrische Ausrüstung eines Fahrzeugs mit einem EBS und einer Autopiloteinrichtung, wobei bei einem Ausfall der elektronischen Steuerung des EBS eine zusätzliche elektronische Steuerung ein Bremsblockieren verhindert. Eine gattungsgemäße elektrische Ausrüstung ist aus DE 10 2018 219 378 A1 bekannt. Dort wird bei einer elektro-pneumatischen Betriebsbremseinrichtung ein elektrischer Betriebsbremskreis von einem Primär-Steuermittel gesteuert. Das Primär-Steuermittel erhält von einem Fußbremsmodul ein elektrisches Bremsanforderungssignal und steuert abhängig von diesem ein Druckregelmodul elektrisch an, welches an einem pneumatischen Steuereingang parallel von einem ersten pneumatischen Bremssteuerdruck beaufschlagt wird. DE 10 2014 112 015 A1 offenbart eine elektropneumatische Betriebsbremseinrichtung mit einer primären elektronischen Bremssteuereinrichtung (EBS-ECU), einer sekundären elektronischen Bremssteuereinrichtung (FBM-ECU) und einem elektropneumatischen Druckregelmodul mit einem elektromagnetischen Backup-Ventil.

Wenn das Primär-Steuermittel ausfällt, was durch Eintritt einer Umschaltbedingung wie einem detektierten Fehler in dem Primär-Steuermittel und/oder in deren Stromversorgung festgestellt wird, steuert ein Redundanz-Steuermittel einen pneumatischen Betriebsbremskreis, indem es über eine Magnetventileinrichtung einen pneumatischen Bremssteuerdruck erzeugt, der dann durch das nun entstromte Backup-Ventil des Druckregelmoduls strömt und in dem Druckregelmodul als Radbremsdruck umgesetzt wird. Die Auswertung der Umschaltbedingung sowie die Strömung des Bremssteuerdrucks zu dem Druckregelmodul erfordern jedoch eine gewisse Zeit, wobei im Falle eines Defekts jedoch eine schnelle Reaktion zur Erzeugung des Radbremsdrucks erforderlich ist.

Daher ist besteht die Aufgabe der vorliegenden Erfindung darin, eine elektrische Ausrüstung derart fortzubilden, dass im Fehlerfall eine Kompensation sehr schnell erfolgen kann. Ebenso soll ein Fahrzeug mit einer solchen elektrischen Ausrüstung zur Verfügung gestellt werden.

Diese Aufgabe wird mit den Merkmalen von der Ansprüche 1 und 23 gelöst. Vorteilhafte Weiterbildungen sind Gegenstand der Unteransprüche.

### Offenbarung der Erfindung

Die Erfindung geht aus von einer elektro-pneumatischen Ausrüstung eines Fahrzeugs mit einer durch ein Zündungs- oder Startsignal in Betrieb setzbaren Antriebsmaschine, umfassend eine elektro-pneumatische Betriebsbremseinrichtung, wobei die elektro-pneumatische Betriebsbremseinrichtung wenigstens aufweist:
a) Pneumatische Radbremsaktuatoren,
b) wenigstens einen elektrischen Betriebsbremskreis,
c) wenigstens einen pneumatischen Betriebsbremskreis,
d) eine wenigstens elektrische Betriebsbremseneingabeeinrichtung, welche innerhalb des wenigstens einen elektrischen Betriebsbremskreises ein elektrisches Betätigungssignal (BS) erzeugt,
e) innerhalb des elektrischen Betriebsbremskreises eine primäre elektronische Bremssteuereinrichtung, welche abhängig von dem elektrischen Betätigungssignal (BS) ein einen Soll-Bremsdruck repräsentierendes erstes elektrisches Bremsanforderungssignal (S1) erzeugt,
f) eine sekundäre elektronische Bremssteuereinrichtung, welche insbesondere abhängig von einem von einem Fahrerassistenzsystem automatisch erzeugten Assistenz-Bremsanforderungssignal (AS) und/oder insbesondere abhängig von dem elektrischen Betätigungssignal (BS), und/oder insbesondere unabhängig von dem Zündungs- oder Startsignal wenigstens einen elektrisch betätigten Aktuator durch ein zweites elektrisches Bremsanforderungssignal (S2) steuert, der ausgebildet ist, dass er auf der Basis des zweiten elektrischen Bremsanforderungssignals (S2) wenigstens einen pneumatischen Bremssteuerdruck (p1, p2) erzeugt,
g) wenigstens ein elektropneumatisches Druckregelmodul mit einem integrierten elektronischen Steuergerät als Bestandteil des wenigstens einen elektrischen Betriebsbremskreises, wobei das wenigstens eine elektropneumatische Druckregelmodul ausgebildet ist,
   g1) um an einem elektrischen Steuereingang des Druckregelmoduls das erste elektrische Bremsanforderungssignal (S1) zu empfangen und abhängig von dem ersten elektrischen Bremsanforderungssignal (S1) innerhalb des wenigstens einen elektrischen Betriebsbremskreises einen elektronisch geregelten Bremsdruck für die Radbremsaktuatoren zu erzeugen, und
   g2) um an wenigstens einem pneumatischen Steuereingang des Druckregelmoduls den wenigstens einen pneumatischen Bremssteuerdruck (p1, p2) zu empfangen und abhängig von dem wenigstens einen pneumatischen Bremssteuerdruck (p1, p2) innerhalb des wenigstens einen pneumatischen Betriebsbremskreises einen Bremsdruck für die Radbremsaktuatoren zu erzeugen, und
   g3) um den Bremsdruck in die pneumatischen Radbremsaktuatoren einzusteuern.

Die elektro-pneumatische Betriebsbremseinrichtung ist vorzugsweise ein elektronisches Bremssystem (EBS) mit Bremsdruckregelung. Unter einem Fahrerassistenzsystem soll ein System verstanden werden, welches in der Lage ist, insbesondere abhängig von Betriebs- oder Fahrparametern des Fahrzeugs (z.B. Geschwindigkeit, Drehrate, Verzögerung, Beschleunigung, Rollrate) oder von einer Fahrsituation relativ zu anderen Fahrzeugen (z.B. Abstand, Relativgeschwindigkeit) automatisch oder autonom das Assistenz-Bremsanforderungssignal AS zu erzeugen.

Der elektrische Betriebsbremskreis umfasst insbesondere wenigstens den wenigstens einen elektrischen Kanal der Betriebsbremseneingabeeinrichtung mit dem elektrischen Bremswertgeber, eine elektrische Primär-Versorgungsquelle, die primäre elektronische Steuereinrichtung und das integrierte Steuergerät des wenigstens einen Druckregelmoduls.

Der pneumatische Betriebsbremskreis umfasst insbesondere wenigstens einen pneumatischen Kanal einer Betriebsbremsventileinrichtung als Betriebsbremseneingabeeinrichtung und den pneumatischen Teil des wenigstens einen Druckregelmoduls. Der pneumatische Betriebsbremskreis wird dann durch den wenigstens einen Bremssteuerdruck p1, p2 gesteuert, wenn eine Bremsanforderung des Fahrers vorliegt. Wenn das Assistenz-Bremsanforderungssignal AS des Fahrerassistenzsystem vorliegt, wird der pneumatische Betriebsbremskreis durch die sekundäre elektronische Steuereinrichtung und den elektrisch betätigten Aktuator mittels des wenigstens einen Bremssteuerdrucks p1, p2 gesteuert. Darüber hinaus kann auch parallel eine Bremsanforderung des Fahrers und ein Assistenz-Bremsanforderungssignal AS des Fahrerassistenzsystems vorliegen, wobei dann der pneumatische Betriebsbremskreis ebenfalls durch den wenigstens einen Bremssteuerdruck p1, p2 gesteuert wird.

Der elektrische Betriebsbremskreis ist daher insbesondere ausschließlich von der primären elektronischen Steuereinrichtung und der pneumatische Betriebsbremskreis insbesondere ausschließlich von der sekundären elektronischen Steuereinrichtung elektrisch steuerbar oder regelbar. Weiterhin ist die elektro-pneumatische Betriebsbremseinrichtung insbesondere derart ausgebildet, dass die sekundäre elektronische Bremssteuereinrichtung keine elektrische Steuerung oder Regelung des wenigstens einen Druckregelmoduls und/oder keine Steuerung oder Regelung des elektrischen Betriebsbremskreises vornimmt oder vornehmen kann. Daher soll die sekundäre elektronische Bremssteuereinrichtung auch keinen Bestandteil des elektrischen Betriebsbremskreises bilden.

Der wenigstens eine pneumatische Bremssteuerdruck p1, p2 steht insbesondere auf jede Betätigung des Betriebsbremsbetätigungsorgans hin bereits an dem wenigstens einen elektromagnetischen Backup-Ventil an. Bevor daher der von der primären elektronischen Steuereinrichtung gesteuerte elektrische Betriebsbremskreis ausfällt, steht bereits der wenigstens eine pneumatische Bremssteuerdruck p1, p2 an dem (noch) durch Bestromung mittels der primären elektronischen Steuereinrichtung geschlossenen elektromagnetischen Backup-Ventil an, so dass dann bei einem Ausfall des von der primären elektronischen Steuereinrichtung gesteuerten elektrischen Betriebsbremskreises das dann entstromte elektromagnetische Backup-Ventil öffnet und den wenigstens einen pneumatischen Bremssteuerdruck p1, p2 zu einer in das Druckregelmodul integrierten Ventileinrichtung durchleitet und diese dann pneumatisch steuert. In dem wenigstens einen Druckregelmodul wird dann der Radbremsdruck bzw. Radbremsdrücke auf der Basis oder abhängig von dem wenigstens einen pneumatischen Bremssteuerdruck p1, p2 gebildet. Bei einer reinen Fahrerbremsung kann daher die Übernahme der elektrischen Steuerung der elektropneumatischen Betriebsbremseinrichtung innerhalb des elektrischen Betriebsbremskreises durch die dann rein pneumatische Steuerung mittels des wenigstens einen pneumatischen Bremssteuerdrucks p1, p2 innerhalb des wenigstens einen pneumatischen Betriebsbremskreises relativ schnell erfolgen.

Eine solche schnelle Reaktion des durch die sekundäre elektronische Bremssteuereinrichtung gesteuerten wenigstens einen pneumatischen Betriebsbremskreises ist jedoch dann nicht gegeben, wenn erst auf eine Detektion eines Defekts beispielsweise in dem elektrischen Betriebsbremskreis hin die Steuerung/Regelung des pneumatischen Betriebsbremskreises durch die sekundäre elektronische Bremssteuereinrichtung übernommen wird und erst dann der wenigstens eine pneumatische Bremssteuerdruck p1, p2 für die pneumatische Steuerung des wenigstens einen Druckregelmoduls erzeugt und zu dem wenigstens einen elektromagnetischen Backup-Ventil des wenigstens einen Druckregelmoduls geleitet wird.

Zur Lösung dieses Problem schlägt die Erfindung zunächst vor, dass
g4) das wenigstens eine elektropneumatische Druckregelmodul wenigstens ein elektromagnetisches Backup-Ventil aufweist, welches mit dem pneumatischen Steuereingang verbunden ist, und welches ausgebildet und gesteuert ist, dass es
g4a) den wenigstens einen pneumatischen Bremssteuerdruck (p1, p2) zurückhält, wenn der wenigstens eine elektrische Betriebsbremskreis intakt ist, aber
g4b) andernfalls, wenn der wenigstens eine elektrische Betriebsbremskreis einen Defekt aufweist, den wenigstens einen pneumatischen Bremssteuerdruck (p1, p2) durchleitet, damit das wenigstens eine Druckregelmodul abhängig von dem wenigstens einen pneumatischen Bremssteuerdruck (p1, p2) den Bremsdruck erzeugen kann.

Gemäß einem ersten Aspekt der Erfindung ist dann weiterhin vorgesehen, dass
h) der wenigstens eine elektrisch betätigte Aktuator von der sekundären elektronischen Bremssteuereinrichtung abhängig von dem Assistenz-Bremsanforderungssignal (AS) und/oder abhängig von dem Betätigungssignal (BS) derart gesteuert wird, dass unabhängig von einem Defekt des elektrischen Betriebsbremskreises auf das Assistenz-Bremsanforderungssignal (AS) und/oder auf das Bremsbetätigungssignal (BS) hin der wenigstens eine pneumatischen Bremssteuerdruck p1, p2 durch den elektrisch betätigten Aktuator erzeugt und in den wenigstens einen pneumatischen Steuereingang des wenigstens einen Druckregelmoduls eingesteuert wird.

Folglich steht der wenigstens eine pneumatische Bremssteuerdruck p1, p2 bereits an dem pneumatischen Steuereingang bzw. an dem Backup-Ventil des wenigstens einen Druckregelmoduls an, wenn ein Defekt des elektrischen Betriebsbremskreises noch gar nicht aufgetreten ist. Bei einem Ausfall oder Defekt des elektrischen Betriebsbremskreises öffnet das wenigstens eine, dann entstromte elektromagnetische Backup-Ventil des wenigstens einen Druckregelmoduls automatisch und der Bremsdruck kann in dem Druckregelmodul auf der Basis oder abhängig von dem wenigstens einen pneumatischen Bremssteuerdruck p1, p2 unverzüglich gebildet werden.

Insbesondere sind die sekundäre elektronische Bremssteuereinrichtung und der wenigstens eine Aktuator derart ausgebildet, dass der wenigstens eine pneumatische Bremssteuerdruck p1, p2 abhängig von der autonomen oder automatischen Bremsanforderung ist, welche das Assistenz-Bremsanforderungssignal AS repräsentiert oder verkörpert. Dabei kann vorgesehen sein, dass je größer die autonome oder automatische Bremsanforderung im Betrag ist, desto größer ist auch der wenigstens eine pneumatische Bremssteuerdruck p1, p2, und dass je kleiner die autonome oder automatische Bremsanforderung im Betrag ist, desto kleiner ist auch der wenigstens eine pneumatische Bremssteuerdruck p1, p2.

Folglich wird in vorteilhafter Weise eine schnelle Redundanz für einen ausgefallenen elektrischen Betriebsbremskreis durch eine Steuerung des wenigstens einen pneumatischen Betriebsbremskreises mittels des wenigstens einen pneumatischen Bremssteuerdrucks p1, p2 in dem Fall gewährleistet, wenn ein Assistenz-Bremsanforderungssignal AS von dem Fahrerassistenzsystem erzeugt wird, unabhängig davon, ob der Fahrer das Betriebsbremsbetätigungsorgan betätigt oder nicht.

Weiterhin wurde gemäß einem zweiten Aspekt der Erfindung erkannt, dass wenn beispielsweise sowohl der elektrische Betriebsbremskreis als auch ein elektrischer Anlasser der Antriebsmaschine des Fahrzeugs von derselben Primärversorgungsquelle mit Strom versorgt werden, beim Erzeugen des Zündungs- oder Startsignals für Antriebsmaschine des Fahrzeugs, durch welches die Antriebsmaschine des Fahrzeugs in Betrieb gesetzt wird, die Spannung im elektrischen Betriebsbremskreis so stark abfallen kann, dass dieser unzureichend bestromt ist und dann nicht funktioniert. Der elektrische Betriebsbremskreis wäre dann für die Zeitdauer des Spannungseinbruchs nicht intakt.

Dann aber würde wie oben beschrieben wiederum das oben beschriebene zeitliche Problem der Auswertung der Umschaltbedingung zum Umschalten auf den pneumatischen Betriebsbremskreis auftreten, wobei im Falle eines Defekts jedoch eine schnelle Reaktion zur Erzeugung des Radbremsdrucks erforderlich ist.

Es wurde jedoch erkannt, dass das im Fall eines durch Erzeugen des Zündungs- oder Startsignals bedingten Spannungseinbruchs das elektro-magnetische Backup-Ventil des wenigstens einen Druckregelmoduls unbestromt ist und öffnet, so dass ein von dem wenigstens einen elektrisch betätigten Aktuator erzeugter pneumatischer Bremssteuerdruck p1, p2 durch das geöffnete Backup-Ventil hindurchgeleitet werden kann, damit das wenigstens eine Druckregelmodul den Bremsdruck erzeugen kann.

Gemäß einem zweiten Aspekt der Erfindung ist dann vorgesehen, dass
i) der wenigstens eine elektrisch betätigte Aktuator von der insbesondere durch eine elektrische Sekundär-Versorgungsquelle bestromten sekundären elektronischen Bremssteuereinrichtung derart gesteuert wird, dass unabhängig von und insbesondere bereits vor einem Erzeugen des Zünd- oder Startsignals für die Antriebsmaschine des Fahrzeugs der wenigstens eine pneumatische Bremssteuerdruck p1, p2 durch den wenigstens einen elektrisch betätigten Aktuator erzeugt und in den wenigstens einen pneumatischen Steuereingang des wenigstens einen Druckregelmoduls eingesteuert wird.

Folglich steht der wenigstens eine pneumatische Bremssteuerdruck p1, p2 bereits an dem pneumatischen Steuereingang bzw. an dem Backup-Ventil des wenigstens einen Druckregelmoduls an, wenn das Zünd- oder Startsignal für die Antriebsmaschine des Fahrzeugs noch gar erzeugt worden ist. Bei einem Spannungseinbruch bedingt durch das das Zünd- oder Startsignal und dem dadurch resultierenden Ausfall oder Defekt des elektrischen Betriebsbremskreises öffnet das wenigstens eine, dann entstromte elektromagnetische Backup-Ventil des wenigstens einen Druckregelmoduls automatisch und der Bremsdruck kann in dem Druckregelmodul auf der Basis oder abhängig von dem wenigstens einen pneumatischen Bremssteuerdruck p1, p2 unverzüglich gebildet werden.

In den Unteransprüchen sind bevorzugte Weiterbildungen der Erfindung angegeben.

Besonders bevorzugt sind die sekundäre elektronische Bremssteuereinrichtung und der wenigstens eine elektrische Aktuator derart ausgebildet bzw. ist der wenigstens eine Aktuator von der sekundären elektronischen Bremssteuereinrichtung derart gesteuert, dass auf jedes Assistenz-Bremsanforderungssignal (AS) und/oder und/oder auf jedes Bremsbetätigungssignal BS hin, welches eine insbesondere autonome oder automatische Bremsanforderung repräsentiert, die im Betrag größer als der Betrag einer Grenz-Bremsanforderung a_{grenz} ist, der wenigstens eine pneumatische Bremssteuerdruck p1, p2 erzeugt und in den wenigstens einen pneumatischen Steuereingang des Druckregelmoduls eingesteuert wird.

Infolgedessen steht der wenigstens eine pneumatische Bremssteuerdruck p1, p2 auf jedes (erzeugte) Assistenz-Bremsanforderungssignal AS und/oder auf jedes Bremsbetätigungssignal (BS) hin, welches eine Bremsanforderung repräsentiert, die im Betrag größer als der Betrag der Grenz-Bremsanforderung a_{grenz} ist, unverzüglich und direkt an dem an dem wenigstens einen (noch) durch Bestromung geschlossenen elektromagnetischen Backup-Ventil des wenigstens einen Druckregelmoduls an.

Insbesondere kann die Grenz-Bremsanforderung a_{grenz} gleich Null sein oder eine von Null verschiedene Verzögerung repräsentieren. Insbesondere, wenn die Grenz-Bremsanforderung a_{grenz} eine von Null verschiedene Verzögerung repräsentiert, dann werden der pneumatische Steuerdruck p_{St} und infolgedessen der wenigstens eine Bremssteuerdruck p1, p2 beispielsweise erst ab dem Erreichen einer Grenz-Verzögerung durch das Fahrzeug erzeugt und zur Steuerung des pneumatischen Betriebsbremskreises herangezogen. Dies hat den Vorteil, dass sich dann der Verschleiß des Aktuators reduziert und das akustische Verhalten verbessert wird, weil dann nicht bei jeder noch so kleinen Bremsanforderung der wenigstens eine Bremssteuerdruck p1, p2 erzeugt wird.

Insbesondere kann auch eine Datenverbindung zwischen der primären elektronischen Bremssteuereinrichtung und der sekundären elektronischen Bremssteuereinrichtung vorgesehen sein, insbesondere für einen Daten- und Signalaustausch und/oder zum Zwecke einer gegenseitigen Überwachung.

Die Betriebsbremseneingabeeinrichtung kann insbesondere eine rein elektrische Betriebsbremseneingabeeinrichtung sein, welche lediglich das elektrische Betätigungssignal (BS) aber keinen pneumatischen Bremssteuerdruck erzeugt, oder eine elektro-pneumatische Betriebsbremsventileinrichtung, welche zusätzlich zu dem elektrischen Kanal in wenigstens einem pneumatischen Kanal den wenigstens einen pneumatischen Bremssteuerdruck p1, p2 erzeugt. Die Betriebsbremseneingabeeinrichtung kann ein Betriebsbremsbetätigungsorgan und innerhalb des wenigstens einen elektrischen Betriebsbremskreises wenigstens einen elektrischen Kanal mit wenigstens einem vom Betriebsbremsbetätigungsorgan betätigbaren elektrischen Bremswertgeber aufweisen, welcher von einer Betätigung des Betriebsbremsbetätigungsorgans abhängig das elektrische Betätigungssignal BS erzeugt.

Alternativ kann die Betriebsbremseneingabeeinrichtung auch durch ein beliebiges elektronisches Steuergerät gebildet werden, insbesondere auch ein elektronisches Steuergerät eines Autopiloteinrichtung, welche das Fahrzeug automatisch oder autonom steuert oder regelt.

Auch kann die elektropneumatische Betriebsbremsventileinrichtung ausgebildet sein, dass durch eine Betätigung des Betriebsbremsbetätigungsorgans aufgrund einer Fahrerbremsanforderung wenigstens ein Steuerkolben der Betriebsbremsventileinrichtung mit einer ersten Betätigungskraft F₁ belastet wird und der Steuerkolben wenigstens ein einen Einlasssitz und einen Auslasssitz beinhaltendes Doppelsitzventil der Betriebsbremsventileinrichtung direkt oder indirekt steuert, um den wenigstens einen pneumatischen Bremssteuerdruck p1, p2 zu erzeugen.

In bevorzugter Weise kann der wenigstens eine elektrisch betätigte Aktuator die Betriebsbremsventileinrichtung sowie Mittel zur Erzeugung einer zweiten Betätigungskraft F₂ umfassen, die in Bezug zur ersten Betätigungskraft F₁ parallel und gleichsinnig oder gegensinnig auf den wenigstens einen Steuerkolben der Betriebsbremsventileinrichtung wirkt.

Insbesondere können die Mittel zur Erzeugung der zweiten Betätigungskraft einen elektrisch gesteuerten, insbesondere elektrischen, elektrohydraulischen oder elektropneumatischen Krafterzeuger beinhalten.

Gemäß einer Weiterbildung kann der elektropneumatische Krafterzeuger eine von einem Druckluftvorrat mit unter Vorratsdruck stehender Vorratsdruckluft gespeiste Magnetventileinrichtung umfassen, welche auf der Basis der Vorratsdruckluft an dem Steuerkolben der Betriebsbremsventileinrichtung einen pneumatischen Steuerdruck p_{St} erzeugt, auf welchem die zweite Betätigungskraft F₂ basiert.

Die Magnetventileinrichtung kann beispielsweise eine Einlass-/Auslass-Magnetventilkombination aus einem oder mehreren 2/2-Wege-Magnetventilen, oder aus einem 3/2-Wege-Magnetventil und einem 2/2-Wege-Magnetventil, oder ein Proportional-Magnetventil oder mehrere Proportional-Magnetventile und optional zusätzlich wenigstens ein Relaisventil umfassen.

Auch kann vorgesehen sein, dass die primäre elektronische Bremssteuereinrichtung, das integrierte Steuergerät des wenigstens einen Druckregelmoduls und der Bremswertgeber der Betriebsbremsventileinrichtung an eine Primärsteuerverbindung SV1 angeschlossen sind.

Primärsteuerverbindung SV1 ist bevorzugt separat und unabhängig von einer Sekundärsteuerverbindung SV2, an welche die sekundäre elektronische Bremssteuereinrichtung und wenigstens ein Teil des Krafterzeugers angeschlossen sind. Dadurch ist eine Unabhängigkeit des Energie-, Daten- und Signalflusses gewährleistet, was sich positiv auf die Verfügbarkeit der elektropneumatischen Betriebsbremseinrichtung auswirkt.

Das Fahrerassistenzsystem kann beispielsweise eine Autopiloteinrichtung zum wenigstens teilautonomen Fahren oder zum autonomen Fahren, eine Fahrdynamikregelung (ESP) oder einen Notbremsassistenten umfassen.

Insbesondere kann das Fahrerassistenzsystem das Assistenz-Bremsanforderungssignal AS automatisch und unabhängig von einer Fahrerbremsanforderung oder von dem elektrischen Betätigungssignal BS erzeugen.

Eine Steuerungslogik des Fahrerassistenzsystems bzw. das Fahrerassistenzsystem kann insbesondere auch in der primären elektronischen Bremssteuereinrichtung und/oder in der sekundären elektronischen Bremssteuereinrichtung implementiert sein.

Auch kann die primäre elektronische Bremssteuereinrichtung von einer Primär-Versorgungsquelle mit elektrischer Energie versorgt werden, welche unabhängig von einer Sekundär-Versorgungsquelle ist, welche die sekundäre elektronische Bremssteuereinrichtung mit elektrischer Energie versorgt.

Die sekundäre elektronische Bremssteuereinrichtung und der wenigstens eine Aktuator können ausgebildet sein, dass der wenigstens eine pneumatische Bremssteuerdruck p2 abhängig von wenigstens den folgenden Größen erzeugt und in den wenigstens einen pneumatischen Steuereingang des Druckregelmoduls eingesteuert wird:
a) Einem Masseverhältnis zwischen einem Zugfahrzeug und einem Anhänger,
b) den Achslasten von wenigstens zwei Achsen des Fahrzeugs,
c) einer Anzahl von pneumatischen Kanälen der Betriebsbremsventileinrichtung.

Gemäß einer Weiterbildung kann die primäre elektronische Bremssteuereinrichtung das erste elektrische Bremsanforderungssignal S1 abhängig von dem elektrischen Betätigungssignal BS und/oder abhängig von dem Assistenz-Bremsanforderungssignal AS erzeugen.

Auch können von der primären elektronischen Bremssteuereinrichtung und/oder von der sekundären elektronischen Bremssteuereinrichtung elektrisch ansteuerbare Drucksteuerventile vorgesehen werden, durch welche der Bremsdruck in einem pneumatischen Radbremsaktuator individuell steuerbar ist. Diese Drucksteuerventile sind insbesondere als ABS-Drucksteuerventile ausgebildet und beispielsweise zwischen das wenigstens eine Druckregelmodul und den oder die pneumatischen Radbremsaktuator(en) geschaltet, um den Bremsdruck bremsschlupfabhängig zu halten, zu reduzieren oder zu steigern.

Bevorzugt kann die elektropneumatische Betriebsbremseinrichtung wenigstens einen ersten Bremskreis und einen zweiten Bremskreis umfasst, wobei für jeden Bremskreis der Bremsdruck individuell erzeugt wird.

Auch kann die elektro-pneumatische Betriebsbremsventileinrichtung ausgebildet sein, dass sie kreisgetrennt einen ersten pneumatischen Bremssteuerdruck p1 für einen ersten pneumatischen Betriebsbremskreis und einen zweiten pneumatischen Bremssteuerdruck p2 für einen zweiten pneumatischen Betriebsbremskreis erzeugt.

Weiterhin kann die elektro-pneumatische Betriebsbremseinrichtung wenigstens einen ersten Bremskreis für eine erste Achse (VA) des Fahrzeugs und wenigstens einen zweiten Bremskreis für eine zweite Achse (HA) des Fahrzeugs umfassen und ausgebildet sein, dass ein erster Bremsdruck p_{VA} für den ersten Bremskreis und ein zweiter Bremsdruck p_{HA} für den zweiten Bremskreis individuell erzeugt wird, wobei das Druckregelmodul als 2-Kanal-Druckregelmodul ausgebildet ist und den ersten Bremsdruck p_{VA} auf der Basis des ersten pneumatischen Bremssteuerdrucks p1 und den zweiten Bremsdruck p_{HA} auf der Basis des zweiten pneumatischen Bremssteuerdrucks (p2) erzeugt.

Auch kann die elektro-pneumatische Betriebsbremseinrichtung ein Anhängersteuermodul umfassen, welches als Druckregelmodul ausgebildet ist und welches an seinem elektrischen Steuereingang durch das erste elektrische Bremsanforderungssignal S1 elektrisch gesteuert ist, und welches an seinem pneumatischen Steuereingang durch den ersten Bremsdruck p_{VA} oder den zweiten Bremsdruck p_{HA} pneumatisch gesteuert ist.

Bei der elektropneumatischen Betriebsbremseinrichtung können
a) ein Normalbetrieb vorgesehen sein, bei welchem eine Steuerung/Regelung des elektrischen Betriebsbremskreises insbesondere ausschließlich durch die primäre Bremssteuereinrichtung erfolgt, und/oder
b) eine erste Redundanzebene vorgesehen sein, bei welcher eine Steuerung des wenigstens einen pneumatischen Betriebsbremskreises durch den wenigstens einen, durch den elektrisch betätigten Aktuator erzeugten pneumatischen Bremssteuerdruck (p1, p2), und/oder
c) eine zweite Redundanzebene vorgesehen sein, bei welcher welche eine pneumatische Steuerung des wenigstens einen pneumatischen Betriebsbremskreises insbesondere ausschließlich durch den wenigstens einen, durch eine Betätigung des Betriebsbremsbetätigungsorgans erzeugten pneumatischen Bremssteuerdruck (p1, p2) erfolgt.

Die Erfindung betrifft auch ein Fahrzeug, insbesondere ein Zugfahrzeug, welches zum Ziehen eines Anhängers ausgebildet ist, welches eine oben beschriebene elektrische Ausrüstung umfasst.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### Zeichnung

Nachstehend ist ein bevorzugtes Ausführungsbeispiel der Erfindung in der Zeichnung dargestellt und in der nachfolgenden Beschreibung näher erläutert. In der Zeichnung zeigt
- Fig. 1: einen schematischen Schaltplan einer bevorzugten Ausführungsform einer elektrischen Ausrüstung gemäß der Erfindung, wobei dort pneumatische Verbindungen gezeigt sind;
- Fig. 2: einen schematischen Schaltplan der elektrischen Ausrüstung von Fig. 1, wobei dort elektrische Verbindungen und teilweise pneumatische Verbindungen gezeigt sind;
- Fig. 3: eine schematische Querschnittsdarstellung einer Betriebsbremsventileinrichtung einer elektro-pneumatischen Betriebsbremseinrichtung der elektrischen Ausrüstung von Fig. 1 und Fig. 2 gemäß einer bevorzugten Ausführungsform der Erfindung in einer Stellung "Fahren".

### Beschreibung des Ausführungsbeispiels

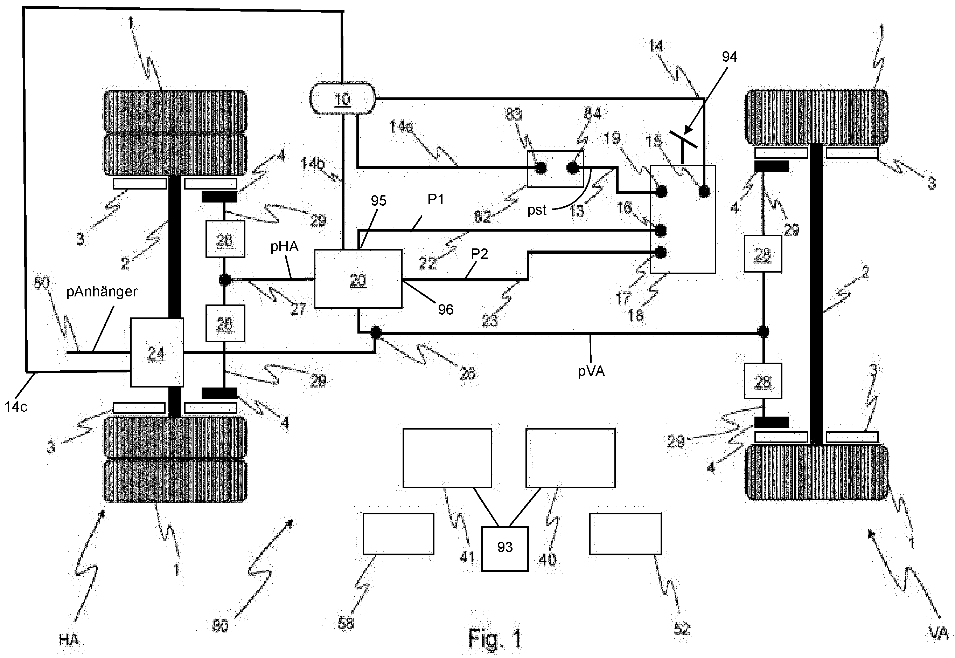

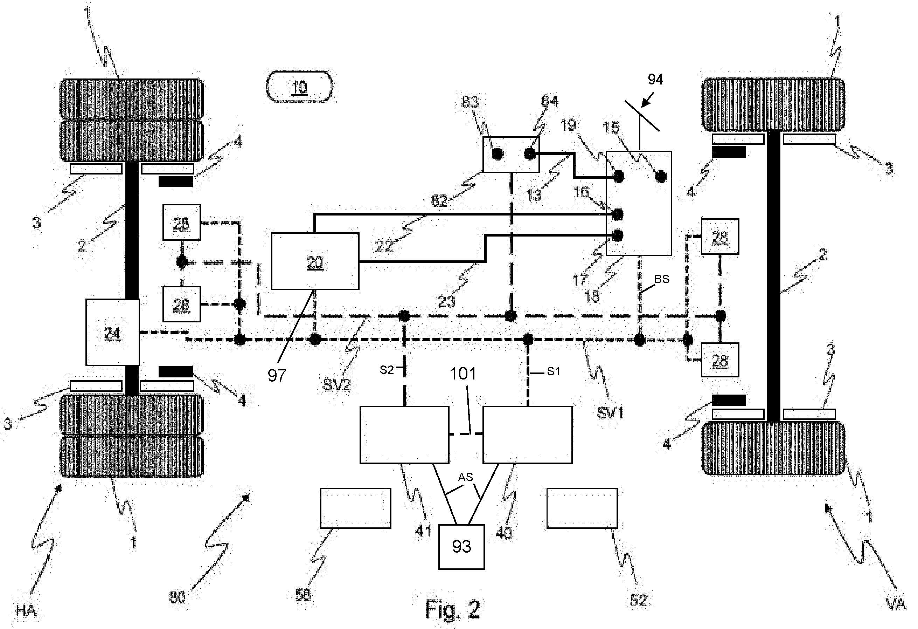

**Fig. 1** zeigt einen schematischen Schaltplan einer bevorzugten Ausführungsform einer elektrischen Ausrüstung gemäß der Erfindung, mit einer elektropneumatischen Betriebsbremseinrichtung 80, wobei dort pneumatische Verbindungen gezeigt sind und **Fig. 2** einen schematischen Schaltplan der elektrischen Ausrüstung von **Fig. 1****,** wobei dort elektrische Verbindungen und teilweise pneumatische Verbindungen gezeigt sind. Die nachfolgende Beschreibung der elektrischen Ausrüstung bezieht sich auf beide Figuren.

Es ist eine Vorderachse VA und eine Hinterachse HA gezeigt, welche jeweils über Räder 1 verfügt, die an einer Achse 2 drehbar befestigt sind. Den Rädern 1 ist jeweils ein pneumatischer Radbremsaktuator 4 zugeordnet, die in dem gezeigten Beispiel als pneumatische Betriebsbremszylinder ausgeführt sind. Ein solcher pneumatischer Radbremsaktuator 4 ist an jedem Rad 1 angeordnet und betätigt hier beispielsweise eine Scheibenbremse 3, um eine Bremskraft zu erzeugen.

Zur Ausführung einer Betriebsbremsung wird der pneumatische Radbremsaktuator 4 mit einem Bremsdruck p_{VA} bzw. p_{HA} beaufschlagt, wodurch sich eine Reibkraft in der Scheibenbremse 3 einstellt, die ein bremsendes Moment zur Folge hat. Ferner sind an den Rädern 1 Drehzahlsensoren (nicht gezeigt) vorgesehen, um Drehzahlen einzelner Räder 1 zu erfassen und in höheren Funktionen wie ABS, ASR oder ESP zu verarbeiten.

Auf die Darstellung weiterer Komponenten des Fahrzeugs und insbesondere des Achsaufbaus bzw. des Aufbaus der Bremsen, wurde in dieser Darstellung aus Gründen der Übersichtlichkeit verzichtet. Weiterhin ist ein derartiger Brems- und Fahrzeugaufbau nicht beschränkend für den Gegenstand der Erfindung anzusehen. Er dient lediglich als Beispiel, um die Wirkungsweise des erfindungsgemäßen Gegenstands zu verdeutlichen. Vielmehr sind auch alternative Aufbaumöglichkeiten einer elektropneumatischen Betriebsbremseinrichtung denkbar, wie beispielsweise Trommelbremsen anstelle der gezeigten Scheibenbremsen 3. Auch weitere Ausführungen eines Fahrzeugs sind denkbar. So könnten beispielsweise mehr als eine Vorder- oder Hinterachse VA, HA, also insgesamt mehr als zwei Achsen vorgesehen sein.

Nachfolgend wird nun die elektropneumatische Betriebsbremseinrichtung 80 beschrieben. Diese weist einen Druckluftvorrat 10 auf, welcher über Versorgungsleitungen 14, 14a, 14b, 14c unterschiedliche Komponenten 18, 20, 24, 82 der elektropneumatischen Betriebsbremseinrichtung 80 mit Druckluft versorgt.

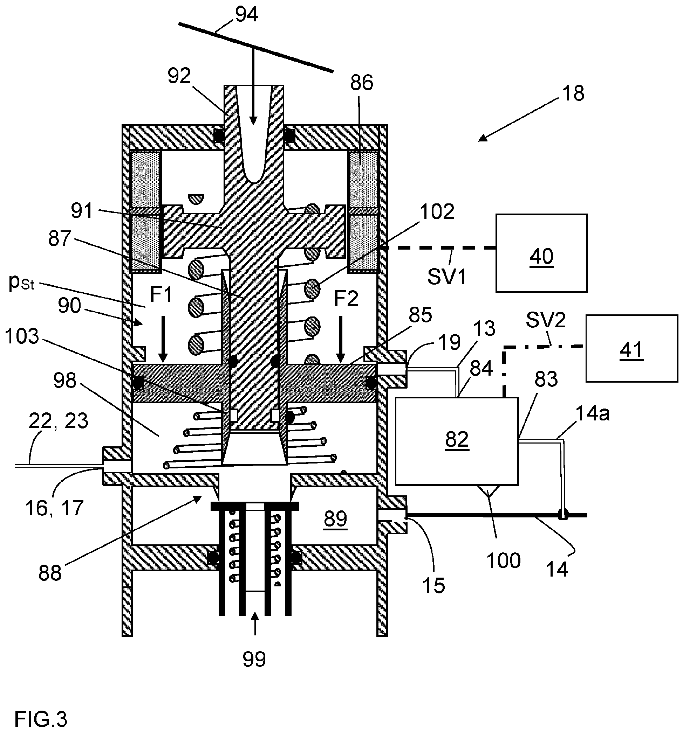

Eine Komponente stellt dabei eine in **Fig. 3** schematisch gezeigte elektropneumatische Betriebsbremsventileinrichtung 18 hier beispielsweise in Form eines Fußbremsmoduls dar, welches mit der Versorgungsleitung 14 über einen Versorgungseingang 15 in Verbindung steht. Darüber wird die Betriebsbremsventileinrichtung 18 mit Druckluft versorgt. Die Betriebsbremsventileinrichtung 18 weist ferner einen pneumatischen Steuereingang 19 auf, über den sie einen pneumatischen Steuerdruck p_{St} empfangen kann, mit welchem dann die Betriebsbremsventileinrichtung 18 pneumatisch gesteuert wird. Darüber hinaus weist die Betriebsbremsventileinrichtung 18 zwei pneumatische Steuerausgänge 16, 17 auf, über die sie einen ersten pneumatischen Bremssteuerdruck p₁ und/oder einen zweiten pneumatischen Bremssteuerdruck p₂ in pneumatische Steuerleitungen 22, 23 aussteuern kann.

Ferner verfügt die Betriebsbremsventileinrichtung 18 über ein Betriebsbremsbetätigungsorgan 94 wie beispielsweise ein Bremspedal, über welches Bremsanforderungen eines Fahrers eingegeben werden können. Die Betriebsbremsventileinrichtung 18 ist dazu ausgebildet, eine Bremsanforderung des Fahrers über einen in **Fig. 3** gezeigten insbesondere elektrischen und berührungslos arbeitenden Bremswertgeber 86 innerhalb ihres elektrischen Kanals zu erfassen und als von einer Betätigung abhängiges elektrisches Betätigungssignal BS in eine Primärsteuerverbindung SV1 einzusteuern, wie in **Fig. 2** gezeigt ist. Über die Primärsteuerverbindung SV1 wird dann das elektrische Betätigungssignal BS in eine primäre elektronische Bremssteuereinrichtung 40 eingesteuert, welche hier beispielsweise durch das elektronische EBS-Steuergerät gebildet wird. Abhängig von dem Betätigungssignal BS erzeugt dann die primäre elektronische Bremssteuereinrichtung 40 ein erstes elektrisches Bremsanforderungssignal S1, in welchem auch höhere Funktionen wie beispielsweise eine achslastabhängige Bremskraftverteilung berücksichtigt wird. Insofern kann das erste elektrische Bremsanforderungssignal S1 sich für die Vorderachse VA und Hinterachse HA auch unterscheiden bzw. wird achsbezogen gebildet.

Die Betriebsbremsventileinrichtung 18 hat ein Gehäuse, in dem ein Stößelkolben 91 mit einem durch eine Deckelöffnung eines Gehäusedeckels ragenden Stößelaufnahme 92 axial beweglich aufgenommen ist. In die Stößelaufnahme 92 ragt ein hier nicht gezeigter Stößel von oben her hinein, welcher mit dem Betriebsbremsbetätigungsorgan 94 hier beispielsweise in Form einer Fußbremsplatte verbunden ist. Wenn daher der Fahrer das Betriebsbremsbetätigungsorgan 94 betätigt, drückt der Stößel in die Stößelaufnahme 92 und der Stößelkolben 91 wird durch die Betätigungskraft in **Fig. 3** nach unten bewegt, wie dort durch den Pfeil veranschaulicht wird. Der Stößelkolben 91 überträgt die Betätigungskraft auf einen im Gehäuse 2 ebenfalls axial beweglich gelagerten Steuerkolben 85 vorzugsweise über eine Stößelkolben-Druckfeder 102.

Weiterhin steht der Steuerkolben 85 über eine Stößelkolbenstange 87 mit dem Stößelkolben 91 in mechanischer Wirkverbindung, wobei die Stößelkolbenstange 87 mit dem Stößelkolben 91 verbunden ist und in einem als becherförmige Hülse 103 ausgebildeten Ende des Steuerkolbens 85 axial anschlagen kann, wenn die Stößelkolbenstange 87 den Boden der Hülse 103 erreicht hat, wenn z.B. der Stößelkolben 91 auf den Steuerkolben 85 infolge einer Betätigung des Betriebsbremsbetätigungsorgans 94 zubewegt wird. Andererseits kann die Stößelkolbenstange 87 in der Hülse 103 gleiten, wenn der Stößelkolben 91 vom Steuerkolben 85 wegbewegt wird.

Auf der anderen Seite des Steuerkolbens 85 ist an einer Kolbenstange des Steuerkolbens 85 ein Auslasssitz eines Doppelsitzventils 88 ausgebildet, welcher gegen einen im Gehäuse axial beweglich gelagerten, becherförmigen und hohlen Ventilkörper des Doppelsitzventils 88 dichtet oder von diesem abgehoben, einen Strömungsquerschnitt zwischen einer Arbeitskammer 98 und einer kopfseitigen Durchgangsöffnung im Ventilkörper freigibt, welche zu einem Entlüftungsanschluss 99 führt. Die Arbeitskammer 98 steht mit den Steuerausgängen 16, 17 und diese mit den Steuerleitungen 22, 23 in Verbindung, welche wiederum mit den pneumatischen Steuereingängen 95, 96 eines Druckregelmoduls 20 verbunden sind. Vereinfachend sind hier die Steuerausgänge 16, 17 zeichnerisch in einen Anschluss gelegt, in der Realität sind jedoch zwei getrennte Steuerausgänge 16, 17 vorhanden.

In der Betriebsbremsventileinrichtung 18 ist eine Steuerkammer 90 zwischen dem Stößelkolben 91 und der zu diesem weisenden Fläche des Steuerkolbens 85 ausgebildet. Dabei mündet der pneumatische Steuereingang 19 am Gehäuse in die Steuerkammer 90.

An den pneumatischen Steuereingang 19 ist die Steuerleitung 13 und damit auch der Steuerausgang 84 einer Magnetventileinrichtung 82 angeschlossen ist, welche an ihrem Versorgungseingang 83 mit der an einen Druckluftvorrat 10 angeschlossenen Versorgungsleitung 14a in Verbindung steht. Weiterhin ist an dem Gehäuse der Betriebsbremsventileinrichtung 18 auch der Versorgungseingang 15 vorhanden, an welchen die Versorgungsleitung 14 angeschlossen ist und welcher mit einer Vorratskammer 89 der Betriebsbremsventileinrichtung 18 in Verbindung steht.

Der Ventilkörper ist mittels einer am Boden des Gehäuses und am Inneren des Ventilkörpers abgestützten Ventilkörper-Druckfeder gegen einen Einlasssitz des Doppelsitzventils 88 gedrängt, welcher an einem radial inneren Rand einer zentralen Durchgangsbohrung einer weiteren Innenwandung des Gehäuses ausgebildet ist. Im gegen die Wirkung der Ventilkörper-Druckfeder von dem Einlasssitz abgehobenen Zustand des Ventilkörpers wird ein Strömungsquerschnitt zwischen dem Versorgungseingang 15 bzw. der Vorratskammer 89 und der Arbeitskammer 98 freigegeben, welcher eine Strömung von unter Vorratsdruck stehender Druckluft in die Steuerausgänge 16, 17, d.h. in die Steuerleitungen 22, 23 ermöglicht, um die Radbremsaktuatoren 4 der betreffenden Achse bzw. des betreffenden Bremskreises, Vorderachsbremskreis und Hinterachsbremskreis, zu belüften.

In **Fig. 3** ist die Stellung "Fahren" der Betriebsbremsventileinrichtung 18 gezeigt, in welcher der Auslasssitz vom Ventilkörper abgehoben und die Steuerausgänge 16, 17 und damit auch die dort angeschlossenen Radbremsaktuatoren 4 mit dem Entlüftungsanschluss 99 verbunden sind. Dadurch sind die aktiven pneumatischen Radbremsaktuatoren 4 gelöst.

Ein Druckregelmodul 20 gemäß **Fig. 1** und **Fig. 2** ist hinlänglich bekannt, beispielsweise von Seite 763, insbesondere Bild E von "Kraftfahrtechnisches Taschenbuch", 24. Auflage, April 2002, Robert Bosch GmbH. Das hier beispielsweise zweikanalige Druckregelmodul 20 beinhaltet je Kanal (hier beispielsweise Vorderachskanal und Hinterachskanal) ein elektromagnetisches Backup-Ventil, welches hier von der primären elektronischen Bremssteuereinrichtung 40 gesteuert ist, wobei jeweils ein Backup-Ventil mit einem pneumatischen Steuereingang 95, 96 verbunden ist. Ausgangsseitig ist das Backup-Ventil mit einem pneumatischen Steuereingang eines integrierten Relaisventils verbunden. Ein solches Backup-Ventil schaltet in seinem von der primären elektronischen Bremssteuereinrichtung 40 bestromtem Zustand, also bei intaktem elektrischem Betriebsbremskreis in seine Sperrstellung und hält dadurch einen an ihm anstehenden pneumatischen Bremssteuerdruck zurück. Im bestromtem Zustand schaltet das Backup-Ventil in seine Durchlassstellung, wodurch der pneumatische Bremssteuerdruck das Relaisventil beaufschlagen kann, welches daraufhin den pneumatischen Bremssteuerdruck auf der Basis des in das Druckregelmodul 20 eingesteuerten Vorratsdrucks aus dem Druckluftvorrat 10 mengenverstärkt und dann als Vorderachs-Bremsdruck p_{VA} und Hinterachs-Bremsdruck p_{HA} an Druckausgängen des Druckregelmoduls 20 in Leitungen 26, 27 aussteuert, welche über Drucksteuerventile 28 mit den Radbremsaktuatoren 4 verbunden sind. Die Drucksteuerventile 28 sind bevorzugt an die Primärsteuerverbindung SV1 und an eine Sekundärsteuerverbindung SV2 angeschlossen.

Zusätzlich umfasst das Druckregelmodul 20 eine von einem integrierten elektronischen Druckregelmodul-Steuergerät gesteuerte Einlass-Auslass-Magnetventilkombination, welche ausgangsseitig mit dem pneumatischen Steuereingang des Relaisventils verbunden ist. Daher kann das Relaisventil entweder durch den durch das unbestromte Backup-Ventil hindurch gesteuerten pneumatischen Bremssteuerdruck oder durch den pneumatischen Bremssteuerdruck beaufschlagt werden, welcher auf elektrischem Wege durch die Steuerung der Einlass-Auslass-Magnetventilkombination mittels des integrierten elektronischen Druckregelmodul-Steuergeräts erzeugt wird. Das Druckregelmodul-Steuergerät steht über einen elektrischen Steuereingang 97 mit der Primärsteuerverbindung SV1 in Verbindung, an welche auch die primäre elektronische Bremssteuereinrichtung 40 angeschlossen ist, wodurch das Druckregelmodul-Steuergerät von der primären elektronischen Bremssteuereinrichtung 40 steuerbar bzw. mit Steuersignalen versorgbar ist.

Zusätzlich sind in einem solchen Druckregelmodul 20 ein Drucksensor zur Messung des vom Relaisventil ausgesteuerten Ist-Bremsdrucks p_{VA} bzw. p_{HA} integriert. Der vom Drucksensor gemessene Ist-Bremsdruck wird dann mit einem Soll-Bremsdruck im Sinne einer Druckregelung abgeglichen, der durch ein erstes elektrisches Bremsanforderungssignal S1 repräsentiert wird, das von der primären elektronischen Bremssteuereinrichtung 40 in die Primärsteuerverbindung SV1 eingesteuert wird. Hierzu umfasst das elektronische Druckregelmodul-Steuergerät des Druckregelmoduls 20 entsprechende Druckregelroutinen.

Die Magnetventileinrichtung 82 ermöglicht eine elektronisch gesteuerte Be- oder Entlüftung der Steuerkammer 90 und wird von einer sekundären elektronischen Bremssteuereinrichtung 41 elektrisch gesteuert. Hierzu ist die Magnetventileinrichtung 82 mit einem elektrischen Steuereingang an eine Sekundärsteuerverbindung SV2 angeschlossen, welche hier beispielsweise durch einen zweiten CAN-Datenbus gebildet wird.

Insbesondere sind die primäre elektronische Bremssteuereinrichtung 40, der elektrische/elektronische Teil des Druckregelmoduls 20 und der Bremswertgeber 86 der Betriebsbremsventileinrichtung 18 an die Primärsteuerverbindung SV1 angeschlossen sind, welche separat und unabhängig von der Sekundärsteuerverbindung SV2 ist, an welche die sekundäre elektronische Bremssteuereinrichtung 41 und die Magnetventileinrichtung 82 angeschlossen sind.

Insbesondere kann eine Datenverbindung 101 zwischen der primären elektronischen Bremssteuereinrichtung 40 und der sekundären elektronischen Bremssteuereinrichtung 41 vorgesehen sein, insbesondere für einen Daten- und Signalaustausch und/oder zum Zwecke einer gegenseitigen Überwachung. Insbesondere kann (können) über die Datenverbindung 101 auch das Betätigungssignal BS und/oder das erste elektrische Bremsanforderungssignal S1 in die sekundäre elektronische Bremssteuereinrichtung 41 und/oder das zweite elektrische Bremsanforderungssignal S2 in die primäre elektronische Bremssteuereinrichtung 40 eingesteuert werden. Eine Intaktheit der primären elektronischen Bremssteuereinrichtung 40 und der sekundären elektronischen Bremssteuereinrichtung 41 sind hierfür nicht erforderlich, weil die Signale bevorzugt lediglich durchgeschleift werden.

Die Magnetventileinrichtung 82 weist bevorzugt neben einer in **Fig. 3** gezeigten Entlüftung 100 wenigstens einen hier nicht gezeigten Drucksensor zum Messen des Ist-Werts des pneumatischen Steuerdrucks p_{ST} am Steuerausgang 84, so dass in Verbindung mit entsprechenden Algorithmen in der sekundären elektronischen Bremssteuereinrichtung 41, welcher dieser Ist-Wert gemeldet wird, eine Druckregelung des ausgesteuerten Steuerdrucks p_{ST} möglich ist bzw. auch bevorzugt durchgeführt wird.

Die sekundäre elektronische Bremssteuereinrichtung 41 steuert die Magnetventileinrichtung 82 über die Sekundärsteuerverbindung SV2 durch ein zweites elektrisches Bremsanforderungssignal S2, wobei dann die Magnetventileinrichtung 82 den pneumatischen Steuerdruck p_{ST} am Steuerausgang 84 abhängig von dem zweiten elektrischen Bremsanforderungssignal S2 erzeugt.

Beispielsweise kann innerhalb der Magnetventileinrichtung 82 ein elektropneumatisches Proportionalventil für einen entsprechend dem zweiten elektrischen Bremsanforderungssignal S2 (proportional) ausgesteuerten Steuerdruck p_{St} am Steuerausgang 84 sorgen, wobei ebenfalls eine Be- und Entlüftung möglich ist. Bei einer weiteren hier nicht dargestellten Ausführung kann eine Einlass-/Auslassventilkombination beispielsweise aus zwei 2/2-Wege-Magnetventilen vorgesehen sein, wobei das mit dem Versorgungseingang 83 verbundene Einlassventil unbestromt geschlossen und bestromt geöffnet und das Auslassventil unbestromt geöffnet und bestromt geschlossen ist. Auch kann gemäß einer weiteren Ausführung als Magnetventileinrichtung 82 ein 3/2-Wege-Magnetventil als Be- und Entlüftungsventil mit einer Belüftungsstellung und einer Entlüftungsstellung in Kombination mit einem 2/2-Wege-Magnetventil als Halteventil verwendet werden, welches in seiner Sperrstellung den Druck am Steuerausgang hält.

Eine solche Magnetventileinrichtung 82 kann insbesondere in jeder der oben beschriebenen Ausführungsformen in Kombination mit einem Drucksensor und einem in der sekundären elektronischen Bremssteuereinrichtung 41 implementierten Steuerdruckregler verwendet werden, um den am Steuerausgang 84 anstehenden pneumatischen Steuerdruck p_{St} zu regeln.

Weiterhin umfasst die elektrische Ausrüstung ein Fahrerassistenzsystem 93 wie beispielsweise eine Autopiloteinrichtung oder ein Notbremsassistent vorgesehen, welches automatisch Bremsanforderungen erzeugen kann, welche dann durch ein Assistenz-Bremsanforderungssignal AS repräsentiert werden, welches hier beispielsweise sowohl in die primäre elektronische Bremssteuereinrichtung 40 wie auch in die sekundäre elektronische Bremssteuereinrichtung 41 eingesteuert wird, wie **Fig. 2** zeigt. Alternativ könnte das Assistenz-Bremsanforderungssignal AS auch lediglich in die sekundäre elektronische Bremssteuereinrichtung 41 eingesteuert werden. Mit der Autopiloteinrichtung ist ein wenigstens teilautonomes Fahren möglich.

Auch könnten die Routinen des Fahrerassistenzsystems 93 in der primären elektronischen Bremssteuereinrichtung 40 und/oder in der sekundären elektronischen Bremssteuereinrichtung 41 implementiert sein.

Nicht zuletzt wird die primäre elektronische Bremssteuereinrichtung 40 von einer Primär-Versorgungsquelle 52 mit elektrischer Energie versorgt, welche unabhängig von einer Sekundär-Versorgungsquelle 58 ist, welche die sekundäre elektronische Bremssteuereinrichtung 41 mit elektrischer Energie versorgt.

Im Folgenden wird nun ein Normalbetrieb, eine erste Redundanzebene, eine zweite Redundanzebene und ein Startbetrieb der elektropneumatischen Betriebsbremseinrichtung beschrieben.

### NORMALBETRIEB

### Fahrerbremsung

Wenn der Fahrer das Betriebsbremsbetätigungsorgan 94 der Betriebsbremsventileinrichtung 18 betätigt, was einer Fahrerbremsanforderung entspricht, wird in dem intakten vorrangigen elektrischen Betriebsbremskreis das Maß der Betätigung die beiden redundanten, vorzugsweise axial hintereinander angeordneten und bevorzugt berührungslos wirkenden Bremswertgeber 86 gemessen. Das von dem Bremswertgeber 86 erfasste elektrische Betätigungssignal BS wird in dem elektrischen Kanal der Betriebsbremsventileinrichtung 18 erzeugt, datenbusfähig gemacht und über die Primärsteuerverbindung PV1 in die primäre elektronische Bremssteuereinrichtung 40 eingesteuert. Da in der primären elektronischen Bremssteuereinrichtung 40 höhere Funktionen wie beispielsweise eine achslastabhängige Bremskraftverteilung implementiert sind, werden dort auf der Basis des elektrischen Betätigungssignals BS getrennt für die Vorderachse VA und die Hinterachse HA je ein erstes Bremsanforderungssignal S1 erzeugt und in den betreffenden Kanal des Druckregelmoduls 20 sowie in das Anhängersteuermodul 24 eingesteuert. Dort werden dann jeweils durch die integrierten Magnetventile und die Relaisventile basierend auf dem jeweiligen Bremsanforderungssignal S1 der Bremsdruck p_{VA} für die Vorderachse VA und der Bremsdruck p_{HA} für die Hinterachse HA erzeugt und über die hier beispielsweise offenen Drucksteuerventile 28 in die Radbremsaktuatoren 4 eingesteuert, um die angeforderte Betriebsbremsung umzusetzen. In analoger Weise setzt das Anhängersteuermodul 24, welches ebenfalls als Druckregelmodul aufgebaut ist, das erste Bremsanforderungssignal S1 in einen Anhängerbremsdruck p_{Anhänger} um, der dann über einen hier nicht dargestellten Kupplungskopf "Anhänger" in einen eventuell angekoppelten Anhänger eingesteuert wird.

Beispielsweise mit dem Bremsdruck p_{VA} für die Vorderachse VA als pneumatischer Steuerdruck wird in dem nachrangigen pneumatischen Bremskreis das Anhängersteuermodul 24 pneumatisch angesteuert, wobei dieser pneumatische Steuerdruck aber durch das in integrierte, bestromte und damit geschlossene Backup-Ventil zurückgehalten und damit nicht umgesetzt wird.

Falls ein übermäßiger Bremsschlupf bei der durch den Fahrer angeforderten Bremsung auftritt, so steuert die primäre elektronische Bremssteuereinrichtung 40, in welcher bevorzugt ABS-Routinen implementiert sind, die an die Primärsteuerverbindung SV1 und an die Sekundärsteuerverbindung SV2 angeschlossenen Drucksteuerventile 28 (**Fig. 2**), um den Bremsdruck radindividuell zu regeln, bis der Bremsschlupf zulässig wird. Dasselbe gilt selbstverständlich auch für eine radindividuelle Steuerung/Regelung der Bremsdrücke im Rahmen einer Fahrdynamikregelung ESP.

Parallel dazu wird bei der Fahrerbremsanforderung in dem nachrangigen pneumatischen Betriebsbremskreis bzw. in den beiden pneumatischen Kanälen der Betriebsbremsventileinrichtung 18 der Stößelkolben 91 nach unten verschoben, wobei der Stößelkolben 91 gegen den Boden der becherförmigen Hülse 103 gedrängt und der Steuerkolben 85 ebenfalls nach unten verschoben wird, bis der Auslasssitz gegen den Ventilkörper dichtet und damit die Verbindung zwischen den Steuerausgängen 16, 17 für die pneumatischen Betriebsbremskreise und dem Entlüftungsanschluss 99 verschließt, so dass keine weitere Entlüftung der zugeordneten Radbremsaktuatoren 4 erfolgen kann.

Bei weiter gehender Betätigung des Betriebsbremsbetätigungsorgans 94 auf die Fahrerbremsanforderung hin wird dann der Ventilkörper mit an ihm anliegenden Auslasssitz unter Abheben vom Einlasssitz nach unten gedrängt. Dadurch gelangt Druckluft unter Vorratsdruck von der Vorratskammer 89 in die Arbeitskammer 98 und von dort in die Steuerausgänge 16, 17 für die pneumatischen Betriebsbremskreise bzw. in die zugeordneten Radbremsaktuatoren 4, um diese zu belüften und damit zuzuspannen. Dabei handelt es sich um eine reine Fahrerbremsung, bei welcher aufgrund der auf das Betriebsbremsbetätigungsorgan 94 vom Fahrer fahrerbremsanforderungsabhängig ausgeübten Betätigungskraft über die Stößelkolben-Druckfeder 102 eine erste Betätigungskraft F1 auf den Steuerkolben 85 ausgeübt wird, welche diesen letztlich in seine Belüftungsstellung stellt.

Bei einer solchen rein durch eine Fahrerbremsanforderung initiierten Bremsung ist die Magnetventileinrichtung 82 mittels der sekundären elektronischen Bremssteuereinrichtung 41 in Entlüftungsstellung gesteuert, in welcher die Steuerkammer 90 mit der Atmosphäre in Verbindung steht, zur Vermeidung von Druckeffekten, die infolge der Expansion der Steuerkammer 90 entstehen könnten. Den Befehl dazu erhält sekundäre elektronische Bremssteuereinrichtung 41 beispielsweise über die Datenverbindung 101 von der primären elektronischen Bremssteuereinrichtung 41.

Da jedoch der vorrangige elektrische Betriebsbremskreis intakt ist, werden die an den Steuerausgängen 16, 17 anstehenden und über die Steuerleitungen 22, 23 in die pneumatischen Steuereingänge 95, 96 des Druckregelmoduls 20 eingesteuerten ersten und zweiten Bremssteuerdrücke p1 und p2 an den dann bestromten und demzufolge geschlossenen Backup-Ventilen im Druckregelmodul 20 zurückgehalten und nicht an die integrierten Relaisventile weitergeleitet.

Damit ist bei intaktem vorrangigem elektrischen Betriebsbremskreis der nachrangige pneumatische Betriebsbremskreis wirkungslos.

### Automatische/Autonome Bremsung

Im Folgenden sei nun der Fall betrachtet, in welchem der Fahrer keine Bremsanforderung ausübt und daher das Betriebsbremsbetätigungsorgan 94 nicht betätigt, aber das Fahrerassistenzsystem 93 sowohl in die primäre elektronische Bremssteuereinrichtung 40 als auch in die sekundäre elektronische Bremssteuereinrichtung 41 jeweils ein Assistenz-Bremsanforderungssignal AS einsteuert, wie in **Fig. 2** angedeutet ist.

Dabei kann die primäre elektronische Bremssteuereinrichtung 40 auf der Basis des Assistenz-Bremsanforderungssignals AS ein erstes elektrisches Bremsanforderungssignal S1 erzeugen, welches dann in dem elektrischen Betriebsbremskreis wie oben beschrieben durch das Druckregelmodul 20 und das Angersteuermodul 24 in entsprechende Bremsdrücke P_{VA}, p_{HA} und p_{Anhänger} gewandelt wird. Folglich wird das Assistenz-Bremsanforderungssignal AS dann durch den intakten elektrischen Betriebsbremskreis bzw. das intakte Druckregelmodul 20 umgesetzt.

Parallel dazu oder gleichzeitig erzeugt die sekundäre elektronische Bremssteuereinrichtung 41 auf der Basis des Assistenz-Bremsanforderungssignals AS das zweite elektrische Bremsanforderungssignal S2, welches über die Sekundärsteuerverbindung SV2 in die Magnetventileinrichtung 82 eingesteuert wird, welche daraufhin in Belüftungsstellung gestellt wird und dadurch den pneumatischen Steuerdruck p_{St} erzeugt, mit welchem die Steuerkammer 90 beaufschlagt wird. Der dann in der Steuerkammer 90 herrschende Steuerdruck p_{St} wirkt auf den diesen begrenzenden Stößelkolben 91 und damit auf das Betriebsbremsbetätigungsorgan 94 zurück, was der Fahrer an seinem Fuß spüren kann, wenn er das Betriebsbremsbetätigungsorgan 94 berührt (Pedalrückwirkung). Damit kann der Fahrer eine Einleitung einer automatischen Bremsung am Fuß spüren.

Je nach Modulation des in die Steuerkammer 90 eingesteuerten pneumatischen Steuerdrucks p_{St} ist es dann möglich, eine definierte zweite Betätigungskraft F2 am Steuerkolben 85 einzustellen. Die bevorzugt in Bezug auf die erste Betätigungskraft F1 parallel und gleichgerichtet auf den Steuerkolben 85 wirkende zweite Betätigungskraft F2 sorgt wie oben bei der ersten Betätigungskraft F1 beschrieben, für eine Erzeugung des ersten und zweiten pneumatischen Bremssteuerdrucks p1, p2, welche an den Steuerausgängen 16, 17 und über die Steuerleitungen 22, 23 in das Druckregelmodul 20 eingesteuert werden. Dort werden der erste und zweite pneumatische Bremssteuerdruck p1, p2 allerdings von den durch die primäre elektronische Bremssteuereinrichtung 40 bestromten und damit geschlossen gehaltenen Backup-Ventilen zurückgehalten und sind daher (zunächst) wirkungslos. Jedoch können der erste und zweite pneumatische Bremssteuerdruck p1, p2 sofort in dem Druckregelmodul 20 an den integrierten Relaisventilen wirksam werden, wenn die Backup-Ventile infolge eines Defekts in dem elektrischen Betriebsbremskreis entstromt werden und dadurch öffnen.

### Kombination von Fahrerbremsung und autonomer/automatischer Bremsung

Weiterhin ist auch eine Situation denkbar, bei welcher sowohl auf eine Fahrerbremsanforderung als auch auf eine automatisch generierte Bremsanforderung hin gebremst werden soll, beispielsweise dann, wenn der Fahrer aufgrund einer Notbremssituation zwar bremst, aber die Bremsanforderung des Fahrerassistenzsystems, z.B. in Form eines Notbremsassistenten oder einer Autopiloteinrichtung größer ist als die Bremsanforderung des Fahrers.

Dann werden in dem durch die primäre elektronische Bremssteuereinrichtung 40 gesteuerten elektrischen Betriebsbremskreis vorrangig auf der Basis des Assistenz-Bremsanforderungssignals AS die Bremsdrücke p_{VA} bzw. p_{HA} gebildet. Mit anderen Worten wird in dem vorrangigen elektrischen Betriebsbremskreis die Bremsanforderung des Fahrers von der Bremsanforderung des Fahrerassistenzsystems überschrieben.

Parallel dazu wirken auf den Steuerkolben 85 der Betriebsbremsventileinrichtung 18 einerseits die erste Betätigungskraft F1 aus der Fahrerbremsanforderung wie auch die zweite Betätigungskraft F2 aus der automatisch generierten Bremsanforderung gleichsinnig und parallel, wobei sich die Betätigungskräfte F1, F2 am Steuerkolben 85 addieren und dann an den Steuerausgängen 16, 17 der erste pneumatische Bremssteuerdruck p1 und der zweite pneumatische Bremssteuerdruck p2 über die Steuerleitungen 22, 23 in die pneumatischen Steuereingänge 95, 96 des Druckregelmodul 20 ausgesteuert werden, dort aber durch die von der primären elektronischen Bremssteuereinrichtung 40 bestromten Backup-Ventile zurückgehalten werden.

### ERSTE REDUNDANZEBENE

Tritt nun ein Defekt oder Fehler in dem vorrangigen elektrischer Betriebsbremskreis auf, sei es dadurch, dass die Primärversorgungsquelle 52, die primäre elektronische Bremssteuerung 40 und/oder der elektrische/elektronische Teil des Druckregelmoduls 20 einen Defekt aufweist oder ausgefallen ist, so werden die beiden in dem Druckregelmodul 20 integrierten Backup-Ventile entstromt und schalten dadurch in ihre Öffnungsstellung, wodurch im Falle einer Bremsanforderung durch das Fahrer-Assistenzsystem 93, d.h. nach einer Erzeugung des zweiten elektrischen Bremsanforderungssignals S2 die dann bereits dort anstehenden ersten und zweiten Bremssteuerdrücke p1, p2 das betreffende integrierte Relaisventil steuern können, wodurch der Bremsdruck p_{VA} für die Vorderachse VA und der Bremsdruck p_{HA} für die Hinterachse HA erzeugt werden können. Da hier beispielsweise der Bremsdruck p_{VA} für die Vorderachse als pneumatischer Steuerdruck für das Anhängersteuermodul 24 eingesetzt wird, kann auch der Anhängerbremsdruck p_{Anhänger} erzeugt werden, so dass auch ein eventuell angekoppelter Anhänger abgebremst werden kann.

Bei der ersten Redundanzebene wird daher davon ausgegangen, dass die sekundäre elektronische Bremssteuerung 40 intakt ist, da ansonsten kein zweites elektrisches Bremsanforderungssignal S2 erzeugt und davon abhängig die ersten und zweiten pneumatischen Bremssteuerdrücke p1 und p2 gebildet werden können.

Zur radindividuellen Anpassung der Bremsdrücke p_{VA} und p_{HA}, beispielsweise im Rahmen einer Bremsschlupfregelung ABS, einer Antriebsschlupfregelung ASR und/oder einer Fahrdynamikregelung ESP, kann die intakte sekundäre elektronische Bremssteuerung 41 die Drucksteuerventile 28 über die Sekundärsteuerverbindung SV2 individuell ansteuern ("Druckhalten", Drucksenken", "Drucksteigern").

In der ersten Redundanzebene besteht bei ausgefallenem elektrischen Betriebsbremskreis daher durch die ersten und zweiten pneumatischen Bremssteuerdrücke p1 und p2 in dem dann wirksamen ersten und zweiten pneumatischen Bremskreisen eine elektrische Redundanz, weil dann die ersten und zweiten pneumatischen Bremssteuerdrücke p1 und p2 mittels der sekundären elektronische Bremssteuerung 40 elektrisch und automatisch erzeugt werden

Weiterhin wird bei ausgefallenem elektrischen Betriebsbremskreis durch die ersten und zweiten pneumatischen Bremssteuerdrücke p1 und p2 in den dann ebenfalls wirksamen ersten und zweiten pneumatischen Bremskreisen eine automatische Bremsanforderung umgesetzt, wobei die ersten und zweiten Bremssteuerdrücke p1 und p2 bei ausgefallenem elektrischen Betriebsbremskreis dann sofort wirksam werden können, weil sie bereits auf das Assistenz-Bremsanforderungssignal AS hin erzeugt worden sind und dann auch bereits an den Backup-Ventilen des Druckregelmoduls 20 anstehen.

### ZWEITE REDUNDANZEBENE

Wenn ausgehend von dem Zustand der elektropneumatischen Betriebsbremseinrichtung 18 in der ersten Redundanzebene, d.h., wenn die primäre elektronische Bremssteuereinrichtung 40 ausgefallen ist, nun auch ein Defekt oder Fehler in der Steuerung des pneumatischen Betriebsbremskreises durch die sekundäre elektronische Bremssteuereinrichtung 41 und die Magnetventileinrichtung 82 auftritt, so können der erste und zweite pneumatische Bremssteuerdruck p1 und p2 nicht mehr elektrisch gebildet werden, so dass dann auch kein autonomer oder automatischer Bremsbetrieb durch das Fahrerassistenzsystem 93 mehr möglich ist.

Dann kann der pneumatische Betriebsbremskreis nur noch durch Bremsanforderungen des Fahrers und die dann mechanisch erzeugten ersten und zweiten pneumatischen Bremssteuerdrücke p1 und p2 gesteuert werden. Da die Backup-Ventile im Druckregelmodul 20 dann entstromt und folglich in ihre Durchlassstellung geschaltet sind, bewirken der erste und zweite pneumatische Bremssteuerdruck p1 und p2 im Druckregelmodul 20 ein Generieren des Bremsdrucks p_{VA} für die Vorderachse und des Bremsdrucks p_{HA} für die Hinterachse HA. Da bevorzugt der Bremsdruck p_{VA} für die Vorderachse VA als pneumatischer Steuerdruck für das Anhängersteuermodul 24 eingesetzt wird, kann auch der Anhängerbremsdruck p_{Anhänger} erzeugt werden, so dass auch ein eventuell an das Fahrzeug angekoppelter Anhänger abgebremst werden kann.

Nicht mehr möglich ist dann aber wegen des Ausfalls aller elektrischen Betriebsbremskreise eine Druckregelung sowie eine Ansteuerung der Drucksteuerventile 28, so dass die Bremsdrücke p_{VA} und p_{HA} nicht mehr radindividuell geregelt werden können.

Wie oben beschrieben, sind daher die elektropneumatische Betriebsbremseinrichtung 80 und insbesondere die sekundäre elektronische Bremssteuereinrichtung 41 (durch eine entsprechende Programmierung), die Magnetventileinrichtung 82 und die Betriebsbremsventileinrichtung 18 derart ausgebildet, dass die ersten und zweiten pneumatischen Bremssteuerdrücke p1 und p2 auf beispielsweise jedes automatisch erzeugte Assistenz-Bremsanforderungssignal AS hin, welches eine autonome oder automatische Bremsanforderung repräsentiert, erzeugt werden und dann unverzüglich und direkt an dem an dem (noch) durch Bestromung geschlossenen elektromagnetischen Backup-Ventil des Druckregelmoduls 20 anstehen.

Unabhängig davon, ob nun eine Fahrerbremsung und/oder eine automatische Bremsung angefordert wird, stehen daher stets bereits der erste pneumatische Bremssteuerdruck p1 und der zweite pneumatische Bremssteuerdruck p2 in dem Druckregelmodul 20 an und können daher sofort nach dem Ausfall des elektrischen Betriebsbremskreises für eine Erzeugung der Bremsdrücke p_{VA}, p_{HA} und p_{Anhänger} sorgen.

Um jedoch den Verschleiß an der Magnetventileinrichtung 82 und an der Betriebsbremsventileinrichtung 18 zu reduzieren, welche wie oben beschrieben eigentlich bei jeder autonomen oder automatischen Bremsanforderung aktiviert werden, und um auch die daraus resultierende akustische Belastung zu reduzieren, wird bevorzugt nur dann der pneumatische Steuerdruck p_{St} und/oder die ersten und zweiten pneumatischen Bremssteuerdrücke p1 und p2 nur dann elektrisch erzeugt, wenn der Betrag der durch das Assistenz-Bremsanforderungssignal AS repräsentierten automatischen oder autonomen Bremsanforderung größer als der Betrag einer Grenz-Bremsanforderung a_{grenz} ist. Diese Einschränkung kann beispielsweise durch eine entsprechende Programmierung der sekundären elektronischen Bremssteuereinrichtung 41 realisiert sein.

Bevorzugt ist daher die Grenz-Bremsanforderung a_{grenz} eine von Null verschiedene Verzögerung oder repräsentiert eine solche, beispielsweise -3m/s². Wenn daher beispielsweise eine automatische oder autonome Bremsanforderung (Verzögerung) von - 4m/s² angefordert wird, so würden erste und zweite pneumatische Bremssteuerdrücke p1 und p2 elektrisch erzeugt werden, bei einer automatischen oder autonomen Bremsanforderung (Verzögerung) von lediglich -2m/s² hingegen nicht.

Alternativ kann die Grenz-Bremsanforderung a_{grenz} jedoch auch gleich Null sein, wobei dann bei jeder angeforderten autonomen oder automatischen Bremsung, bei welcher der Betrag der Bremsanforderung größer als Null ist, die ersten und zweiten pneumatischen Bremssteuerdrücke p1 und p2 elektrisch erzeugt werden.

Auch können der die ersten und zweiten pneumatische Bremssteuerdrücke p1 und p2 abhängig von wenigstens den folgenden Größen erzeugt und in die pneumatischen Steuereingänge 95, 96 des Druckregelmoduls 20 eingesteuert werden:
a) Einem Masseverhältnis zwischen dem Zugfahrzeug und dem Anhänger,
b) den Achslasten der Hinterachse HA und der Vorderachse VA,
c) der Anzahl von pneumatischen Kanälen der Betriebsbremsventileinrichtung.

### STARTBETRIEB

Es wurde erkannt, dass wenn beispielsweise sowohl der elektrische Betriebsbremskreis als auch ein elektrischer Anlasser der Antriebsmaschine des Fahrzeugs von derselben, hier beispielsweise von der Primärversorgungsquelle 52 mit Strom versorgt werden, beim Erzeugen des Zündungs- oder Startsignals für Antriebsmaschine des Fahrzeugs, durch welches dann die Antriebsmaschine des Fahrzeugs mit Hilfe des Anlassers in Betrieb gesetzt wird, die Spannung im elektrischen Betriebsbremskreis so stark abfallen kann, dass dieser unzureichend bestromt ist und dann nicht funktioniert. Der elektrische Betriebsbremskreis wäre dann für die Zeitdauer des Spannungseinbruchs nicht intakt.

Dann aber würde wie oben beschrieben wiederum das zeitliche Problem der Auswertung der Umschaltbedingung zum Umschalten auf den pneumatischen Betriebsbremskreis auftreten, wobei im Falle eines Defekts jedoch eine schnelle Reaktion zur Erzeugung des Radbremsdrucks erforderlich ist.

Es wurde weiterhin erkannt, dass das im Fall eines durch Erzeugen des Zündungs- oder Startsignals bedingten Spannungseinbruchs die elektro-magnetischen Backup-Ventile des Druckregelmoduls 20 unbestromt sind und öffnen, so dass die von der Magnetventileinrichtung 82 mittels des pneumatischen Steuerdruck pSt erzeugten ersten und zweiten Bremssteuerdrücke p1, p2 durch die geöffneten Backup-Ventile hindurchgeleitet werden können, damit das Druckregelmodul 20 die Bremsdrücke pHA und pVA für die Hinterachse und die Vorderachse erzeugen kann.

Die Magnetventileinrichtung 82 wird von der durch die elektrische Sekundär-Versorgungsquelle 58 bestromten sekundären elektronischen Bremssteuereinrichtung 41 daher beispielsweise derart gesteuert, dass unabhängig von und insbesondere bereits vor einem Erzeugen des Zünd- oder Startsignals für die Antriebsmaschine des Fahrzeugs die beiden pneumatischen Bremssteuerdrücke p1, p2 erzeugt und in die beiden pneumatischen Steuereingänge des Druckregelmoduls 20 eingesteuert werden. Da der Anlasser hier nicht von Sekundär-Versorgungsquelle 58 mit Strom versorgt wird, ist die Sekundär-Versorgungsquelle 58 bei der Stromversorgung des Anlassers unbeteiligt, so dass bei ihr kein Spannungseinbruch beim Starten der Antriebsmaschine auftritt.

Folglich stehen die pneumatischen Bremssteuerdrücke p1, p2 bereits an den pneumatischen Steuereingängen bzw. an den Backup-Ventilen des Druckregelmoduls 20 unabhängig von dem Zünd- oder Startsignal für die Antriebsmaschine an, insbesondere wenn das Zünd- oder Startsignal für die Antriebsmaschine des Fahrzeugs noch gar erzeugt worden ist. Bei einem Spannungseinbruch bedingt durch das das Zünd- oder Startsignal und dem dadurch resultierenden Ausfall oder Defekt des elektrischen Betriebsbremskreises öffnen die dann entstromten elektromagnetische Backup-Ventile des Druckregelmoduls 20 automatisch und die Bremsdrücke pHA und pVA können dann in dem Druckregelmodul 20 auf der Basis oder abhängig von den pneumatischen Bremssteuerdrücken p1, p2 unverzüglich gebildet werden.

### BEZUGSZEICHENLISTE

- 1: Rad
- 2: Achse
- 3: Scheibenbremse
- 4: Radbremsaktuator
- 10: Druckluftvorrat
- 13: Steuerleitung
- 14: Versorgungsleitung
- 14a: Versorgungsleitung
- 14b: Versorgungsleitung
- 14c: Versorgungsleitung
- 15: Versorgungseingang (Fußbremsmodul)
- 16: Steuerausgang (Fußbremsmodul, Schnittstelle für VA und Anhänger)
- 17: Steuerausgang (Fußbremsmodul, Schnittstelle für HA)
- 18: Betriebsbremsventileinrichtung
- 19: Steuereingang Fußbremsmodul
- 20: Druckregelmodul
- 22: Steuerleitung (für VA und Trailermodul 24)
- 23: Steuerleitung (für HA)
- 24: Anhängersteuermodul
- 26: Leitung
- 27: Leitung
- 28: Drucksteuerventil
- 29: Bremsleitung
- 40: Primäre elektronische Bremssteuereinrichtung
- 41: Sekundäre elektronische Bremssteuereinrichtung
- 50: Bremsleitung (zum Anhänger)
- 52: Primärversorgungsquelle
- 58: Sekundärversorgungsquelle
- 80: Elektropneumatische Betriebsbremseinrichtung
- 82: Magnetventileinrichtung
- 83: Versorgungseingang (Magnetventileinrichtung)
- 84: Steuerausgang (Magnetventileinrichtung)
- 85: Steuerkolben
- 86: Bremswertgeber
- 87: Stößelkolbenstange
- 88: Doppelsitzventil
- 89: Vorratskammer
- 90: Steuerkammer
- 91: Stößelkolben
- 92: Stößelaufnahme
- 93: Fahrerassistenzsystem
- 94: Betriebsbremsbetätigungsorgan
- 95: pneumatischer Steuereingang
- 96: pneumatischer Steuereingang
- 97: elektrischer Steuereingang
- 98: Arbeitskammer
- 99: Entlüftungsanschluss
- 100: Entlüftung
- 101: Datenverbindung
- 102: Stößelkolben-Druckfeder
- 103: Hülse
- SV1: (elektronische) Primärsteuerverbindung
- SV2: (elektronische) Sekundärsteuerverbindung
- HA: Hinterachse
- VA: Vorderachse
- BS: elektrisches Betätigungssignal
- AS: Assistenz-Bremsanforderungssignal
- F1: erste Kraft
- F2: zweite Kraft
- S1: erstes elektrisches Bremsanforderungssignal
- S2: zweites elektrisches Bremsanforderungssignal
- p1: erster pneumatischer Bremssteuerdruck
- p2: zweiter pneumatischer Bremssteuerdruck
- pSt: pneumatischer Steuerdruck
- pVA: Bremsdruck Vorderachse
- pHA: Bremsdruck Hinterachse
- pAnhänger: Anhängerbremsdruck

## Patentansprüche

1. Elektro-pneumatische Ausrüstung eines Fahrzeugs mit einer durch ein Zündungs- oder Startsignal in Betrieb setzbaren Antriebsmaschine, umfassend eine elektro-pneumatische Betriebsbremseinrichtung (80), wobei die elektro-pneumatische Betriebsbremseinrichtung (80) wenigstens aufweist:
a) Pneumatische Radbremsaktuatoren (4),
b) wenigstens einen elektrischen Betriebsbremskreis,
c) wenigstens einen pneumatischen Betriebsbremskreis,
d) eine wenigstens elektrische Betriebsbremseneingabeeinrichtung (18), welche innerhalb des wenigstens einen elektrischen Betriebsbremskreises ein elektrisches Betätigungssignal (BS) erzeugt,
e) innerhalb des elektrischen Betriebsbremskreises eine primäre elektronische Bremssteuereinrichtung (40), welche abhängig von dem elektrischen Betätigungssignal (BS) ein einen Soll-Bremsdruck repräsentierendes erstes elektrisches Bremsanforderungssignal (S1) erzeugt,
f) eine sekundäre elektronische Bremssteuereinrichtung (41), welche wenigstens einen elektrisch betätigten Aktuator (18, 82) durch ein zweites elektrisches Bremsanforderungssignal (S2) steuert, der ausgebildet ist, dass er auf der Basis des zweiten elektrischen Bremsanforderungssignals (S2) wenigstens einen pneumatischen Bremssteuerdruck (p1, p2) erzeugt,
g) wenigstens ein elektropneumatisches Druckregelmodul (20) mit einem integrierten elektronischen Steuergerät als Bestandteil des wenigstens einen elektrischen Betriebsbremskreises, wobei das wenigstens eine elektropneumatische Druckregelmodul (20) ausgebildet ist,
g1) um an einem elektrischen Steuereingang (97) des Druckregelmoduls (20) das erste elektrische Bremsanforderungssignal (S1) zu empfangen und abhängig von dem ersten elektrischen Bremsanforderungssignal (S1) innerhalb des wenigstens einen elektrischen Betriebsbremskreises einen elektronisch geregelten Bremsdruck (p_{VA}, p_{HA}, p_{Anhänger}) für die Radbremsaktuatoren (3, 4) zu erzeugen, und
g2) um an wenigstens einem pneumatischen Steuereingang (95, 96) des Druckregelmoduls (20) den wenigstens einen pneumatischen Bremssteuerdruck (p1, p2) zu empfangen und abhängig von dem wenigstens einen pneumatischen Bremssteuerdruck (p1, p2) innerhalb des wenigstens einen pneumatischen Betriebsbremskreises einen Bremsdruck (p_{VA}, p_{HA}, p_{Anhänger)}) für die Radbremsaktuatoren (3, 4) zu erzeugen, und
g3) um den Bremsdruck (p_{VA}, p_{HA}, p_{Anhänger)}) in die pneumatischen Radbremsaktuatoren (3, 4) einzusteuern,
g4) das wenigstens eine elektropneumatische Druckregelmodul (20) wenigstens ein elektromagnetisches Backup-Ventil aufweist, welches mit dem pneumatischen Steuereingang (95, 96) verbunden ist, und welches ausgebildet und gesteuert ist, dass es
g4a) den wenigstens einen pneumatischen Bremssteuerdruck (p1, p2) zurückhält, wenn der wenigstens eine elektrische Betriebsbremskreis intakt oder ausreichend bestromt ist, aber
g4b) andernfalls, wenn der wenigstens eine elektrische Betriebsbremskreis einen Defekt aufweist oder unzureichend bestromt ist, den wenigstens einen pneumatischen Bremssteuerdruck (p1, p2) durchleitet, damit das wenigstens eine Druckregelmodul (20) abhängig von dem wenigstens einen pneumatischen Bremssteuerdruck (p1, p2) den Bremsdruck (p_{VA}, p_{HA} p_{Anhänger)}) erzeugen kann, **dadurch gekennzeichnet, dass**
h) der wenigstens eine elektrisch betätigte Aktuator (18, 82) von der sekundären elektronischen Bremssteuereinrichtung (41) abhängig von einem von einem Fahrerassistenzsystem (93) automatisch erzeugten Assistenz-Bremsanforderungssignal (AS) und/oder abhängig von dem elektrischen Betätigungssignal (BS) derart gesteuert wird, dass unabhängig von einem Defekt des elektrischen Betriebsbremskreises auf das Assistenz-Bremsanforderungssignal (AS) und/oder auf das Bremsbetätigungssignal (BS) hin der wenigstens eine pneumatische Bremssteuerdruck (p1, p2) durch den elektrisch betätigten Aktuator (18, 82) erzeugt und in den wenigstens einen pneumatischen Steuereingang (95, 96) des wenigstens einen Druckregelmoduls (20) eingesteuert wird, und/oder wobei
i) der wenigstens eine elektrisch betätigte Aktuator (18, 82) von der sekundären elektronischen Bremssteuereinrichtung (41) derart gesteuert wird, dass unabhängig von einem Erzeugen des Zünd- oder Startsignals für die Antriebsmaschine des Fahrzeugs der wenigstens eine pneumatische Bremssteuerdruck (p1, p2) durch den wenigstens einen elektrisch betätigten Aktuator (18, 82) erzeugt und in den wenigstens einen pneumatischen Steuereingang (95, 96) des wenigstens einen Druckregelmoduls (20) eingesteuert wird.

2. Elektro-pneumatische Ausrüstung nach Anspruch 1, **dadurch gekennzeichnet, dass** der wenigstens eine Aktuator (18, 82) von der sekundären elektronischen Bremssteuereinrichtung (41) derart gesteuert ist, dass auf jedes Assistenz-Bremsanforderungssignal (AS) und/oder auf jedes Bremsbetätigungssignal (BS) hin, welches eine Bremsanforderung repräsentiert, die im Betrag größer als der Betrag einer Grenz-Bremsanforderung (a_{grenz}) ist, der wenigstens eine pneumatische Bremssteuerdruck (p1, p2) erzeugt und in den wenigstens einen pneumatischen Steuereingang (95, 96) des Druckregelmoduls (20) eingesteuert wird.

3. Elektro-pneumatische Ausrüstung nach Anspruch 2, **dadurch gekennzeichnet, dass** die Grenz-Bremsanforderung (a_{grenz}) gleich Null ist oder eine von Null verschiedene Verzögerung repräsentiert.

4. Elektro-pneumatische Ausrüstung nach einem der vorhergehenden Ansprüche, **dadurch gekennzeichnet, dass** die Betriebsbremseneingabeeinrichtung (18)
a) eine rein elektrische Betriebsbremseneingabeeinrichtung (18) ist, welche lediglich das elektrische Betätigungssignal (BS) aber keinen pneumatischen Bremssteuerdruck erzeugt, oder eine
b) eine elektro-pneumatische Betriebsbremsventileinrichtung ist, welche zusätzlich zu dem elektrischen Kanal in wenigstens einem pneumatischen Kanal den wenigstens einen pneumatischen Bremssteuerdruck (p1, p2) erzeugt.

5. Elektro-pneumatische Ausrüstung nach Anspruch 4 , **dadurch gekennzeichnet, dass** die elektro-pneumatische Betriebsbremsventileinrichtung (18) ausgebildet ist, dass durch eine Betätigung eines Betriebsbremsbetätigungsorgans (94) aufgrund einer Fahrerbremsanforderung wenigstens ein Steuerkolben (85) der Betriebsbremsventileinrichtung (18) mit einer ersten Betätigungskraft (F₁) belastet wird und der Steuerkolben (85) wenigstens ein einen Einlasssitz und einen Auslasssitz beinhaltendes Doppelsitzventil (88) der Betriebsbremsventileinrichtung (18) direkt oder indirekt steuert, um den wenigstens einen pneumatischen Bremssteuerdruck (p1, p2) zu erzeugen.

6. Elektro-pneumatische Ausrüstung nach Anspruch 5, **dadurch gekennzeichnet, dass** der wenigstens eine elektrisch betätigte Aktuator (18, 82) die Betriebsbremsventileinrichtung (18) sowie Mittel zur Erzeugung einer zweiten Betätigungskraft (F₂) umfasst, die in Bezug zur ersten Betätigungskraft (F₁) parallel und gleichsinnig oder gegensinnig auf den wenigstens einen Steuerkolben (85) der Betriebsbremsventileinrichtung (18) wirkt.

7. Elektro-pneumatische Ausrüstung nach Anspruch 6, **dadurch gekennzeichnet, dass** die Mittel zur Erzeugung der zweiten Betätigungskraft (F₂) einen elektrisch gesteuerten, insbesondere elektrischen, elektrohydraulischen oder elektropneumatischen Krafterzeuger (82) beinhalten.

8. Elektro-pneumatische Ausrüstung nach Anspruch 7, **dadurch gekennzeichnet, dass** der elektropneumatische Krafterzeuger (82) eine von einem Druckluftvorrat (10) mit unter Vorratsdruck (10) stehender Vorratsdruckluft gespeiste Magnetventileinrichtung umfasst, welche auf der Basis der Vorratsdruckluft an dem Steuerkolben (85) der Betriebsbremsventileinrichtung (18) einen pneumatischen Steuerdruck (p_{St}) erzeugt, auf welchem die zweite Betätigungskraft (F₂) basiert.

9. Elektro-pneumatische Ausrüstung nach einem der Ansprüche 5 bis 8, **dadurch gekennzeichnet, dass** die elektro-pneumatische Betriebsbremsventileinrichtung (18) ausgebildet ist, dass sie kreisgetrennt einen ersten pneumatischen Bremssteuerdruck (p1) für einen ersten pneumatischen Betriebsbremskreis und einen zweiten pneumatischen Bremssteuerdruck (p2) für einen zweiten pneumatischen Betriebsbremskreis erzeugt.

10. Elektro-pneumatische Ausrüstung nach einem der vorhergehenden Ansprüche, **dadurch gekennzeichnet, dass** die elektro-pneumatische Betriebsbremseinrichtung (80) wenigstens einen ersten Bremskreis für eine erste Achse (VA) des Fahrzeugs und wenigstens einen zweiten Bremskreis für eine zweite Achse (HA) des Fahrzeugs umfasst, wobei sie ausgebildet ist, dass ein erster Bremsdruck (p_{VA}) für den ersten Bremskreis und ein zweiter Bremsdruck (p_{HA}) für den zweiten Bremskreis individuell erzeugt wird, wobei das Druckregelmodul (20) als 2-Kanal-Druckregelmodul ausgebildet ist und den ersten Bremsdruck (p_{VA}) auf der Basis des ersten pneumatischen Bremssteuerdrucks (p1) und den zweiten Bremsdruck (p_{HA}) auf der Basis des zweiten pneumatischen Bremssteuerdrucks (p2) erzeugt.

11. Elektro-pneumatische Ausrüstung nach Anspruch 9 oder 10, **dadurch gekennzeichnet, dass** die elektro-pneumatische Betriebsbremseinrichtung (80) ein Anhängersteuermodul (24) umfasst, welches als Druckregelmodul ausgebildet ist und welches an seinem elektrischen Steuereingang durch das erste elektrische Bremsanforderungssignal (S1) elektrisch gesteuert ist, und welches an seinem pneumatischen Steuereingang durch den ersten Bremsdruck (p_{VA}) oder den zweiten Bremsdruck (p_{HA}) pneumatisch gesteuert ist.

12. Elektro-pneumatische Ausrüstung nach einem der vorhergehenden Ansprüche , **dadurch gekennzeichnet, dass** die primäre elektronische Bremssteuereinrichtung (40), das integrierte elektronische Steuergerät des wenigstens einen Druckregelmoduls (20) und der Bremswertgeber (86) der Betriebsbremseneingabeeinrichtung(18) an eine Primärsteuerverbindung (SV1) angeschlossen sind, welche separat und unabhängig von einer Sekundärsteuerverbindung (SV2) ist, an welche die sekundäre elektronische Bremssteuereinrichtung (41) und der wenigstens eine elektrisch betätigte Aktuator (18, 82) angeschlossen sind.

13. Elektro-pneumatische Ausrüstung nach einem der vorhergehenden Ansprüche, **dadurch gekennzeichnet, dass** das Fahrerassistenzsystem (93) eine Autopiloteinrichtung, einen Notbremsassistenten oder eine Fahrdynamikregelung (ESP) umfasst.

14. Elektro-pneumatische Ausrüstung nach einem der vorhergehenden Ansprüche, **dadurch gekennzeichnet, dass** die sekundäre elektronische Bremssteuereinrichtung (41) den wenigstens einen elektrisch betätigten Aktuator (18, 82) derart steuert, dass der wenigstens eine pneumatische Bremssteuerdruck (p1, p2) abhängig von wenigstens den folgenden Größen erzeugt und in den wenigstens einen pneumatischen Steuereingang (95, 96) des Druckregelmoduls (20) eingesteuert wird:
a) Einem Masseverhältnis zwischen dem Fahrzeug und dem Anhänger,
b) den Achslasten von wenigstens zwei Achsen (VA, HA) des Fahrzeugs,
c) einer Anzahl von pneumatischen Kanälen der Betriebsbremsventileinrichtung (18).

15. Elektro-pneumatische Ausrüstung nach einem der vorhergehenden Ansprüche, **dadurch gekennzeichnet, dass** die primäre elektronische Bremssteuereinrichtung (40) das erste elektrische Bremsanforderungssignal (S1) abhängig von dem elektrischen Betätigungssignal (BS) und/oder abhängig von dem Assistenz-Bremsanforderungssignal (AS) erzeugt.

16. Elektro-pneumatische Ausrüstung nach einem der vorhergehenden Ansprüche, **dadurch gekennzeichnet, dass** von der primären elektronischen Bremssteuereinrichtung (40) und/oder von der sekundären elektronischen Bremssteuereinrichtung (40) elektrisch ansteuerbare Drucksteuerventile (28) vorgesehen sind, durch welche der Bremsdruck (p_{VA}, p_{HA}) in einem pneumatischen Radbremsaktuator (4) individuell steuerbar ist.

17. Elektro-pneumatische Ausrüstung nach einem der vorhergehenden Ansprüche, **dadurch gekennzeichnet, dass**
a) ein Normalbetrieb vorgesehen ist, bei welchem eine Steuerung/Regelung des elektrischen Betriebsbremskreises insbesondere ausschließlich durch die primäre Bremssteuereinrichtung (40) erfolgt, und/oder dass
b) eine erste Redundanzebene vorgesehen ist, bei welcher eine Steuerung des wenigstens einen pneumatischen Betriebsbremskreises durch den wenigstens einen, durch den elektrisch betätigten Aktuator (18, 82) erzeugten pneumatischen Bremssteuerdruck (p1, p2), und/oder dass
c) eine zweite Redundanzebene vorgesehen ist, bei welcher eine pneumatische Steuerung des wenigstens einen pneumatischen Betriebsbremskreises insbesondere ausschließlich durch den wenigstens einen, durch eine Betätigung eines Betriebsbremsbetätigungsorgans (94) erzeugten pneumatischen Bremssteuerdruck (p1, p2) erfolgt.

18. Elektro-pneumatische Ausrüstung nach einem der vorhergehenden Ansprüche, **dadurch gekennzeichnet, dass** innerhalb des elektrischen Betriebsbremskreises eine elektrische Primär-Versorgungsquelle (52) vorgesehen ist, welche die primäre elektronische Bremssteuereinrichtung (40) mit elektrischer Energie versorgt.

19. Elektro-pneumatische Ausrüstung nach Anspruch 18, **dadurch gekennzeichnet, dass** die elektrische Primär-Versorgungsquelle (52) unabhängig von einer Sekundär-Versorgungsquelle (58) ist, welche die sekundäre elektronische Bremssteuereinrichtung (41) mit elektrischer Energie versorgt.

20. Elektro-pneumatische Ausrüstung nach den Ansprüchen 7 und 19, **dadurch gekennzeichnet, dass** die Sekundär-Versorgungsquelle (58) den wenigstens einen Teil des Krafterzeugers (82) mit elektrischer Energie versorgt.

21. Elektro-pneumatische Ausrüstung nach einem der vorhergehenden Ansprüche, **dadurch gekennzeichnet, dass** die Betriebsbremseneingabeeinrichtung (18) ein Betriebsbremsbetätigungsorgan (94) und innerhalb des wenigstens einen elektrischen Betriebsbremskreises wenigstens einen elektrischen Kanal mit wenigstens einem vom Betriebsbremsbetätigungsorgan (94) betätigbaren elektrischen Bremswertgeber (86) aufweist, welcher von einer Betätigung des Betriebsbremsbetätigungsorgans (94) abhängig das elektrische Betätigungssignal (BS) erzeugt.

22. Elektro-pneumatische Ausrüstung nach einem der vorhergehenden Ansprüche, **dadurch gekennzeichnet, dass** die sekundäre elektronische Bremssteuereinrichtung (41) abhängig von einem von einem Fahrerassistenzsystem (93) automatisch erzeugten Assistenz-Bremsanforderungssignal (AS) und/oder abhängig von dem elektrischen Betätigungssignal (BS) und/oder unabhängig von dem Zündungs- oder Startsignal den wenigstens einen elektrisch betätigten Aktuator (18, 82) durch das zweite elektrische Bremsanforderungssignal (S2) steuert.

23. Fahrzeug mit einer durch ein Zündungs- oder Startsignal in Betrieb setzbaren Antriebsmaschine, umfassend eine elektro-pneumatische Ausrüstung nach einem der vorhergehenden Ansprüche.

24. Fahrzeug nach Anspruch 23, **dadurch gekennzeichnet, dass** es als Zugfahrzeug zum Ziehen eines gebremsten Anhängers ausgebildet ist.

## Claims

1. Electropneumatic equipment of a vehicle with a prime mover operable by an ignition or starting signal, comprising an electropneumatic service brake device (80), wherein the electropneumatic service brake device (80) has at least:
a) pneumatic wheel brake actuators (4),
b) at least one electric service brake circuit,
c) at least one pneumatic service brake circuit,
d) an at least electric service brake input device (18), which generates an electric actuation signal (BS) within the at least one electric service brake circuit,
e) within the electric service brake circuit, a primary electronic brake control device (40) which generates a first electric braking request signal (S1) representing a target brake pressure in dependence on the electric actuation signal (BS),
f) a secondary electronic brake control device (41) which controls at least one electrically actuated actuator (18, 82) by means of a second electric braking request signal (S2), which actuator is configured to generate at least one pneumatic brake control pressure (p1, p2) based on the second electric braking request signal (S2),
g) at least one electropneumatic pressure control module (20) with an integrated electronic control unit as a component of the at least one electric service brake circuit, wherein the at least one electropneumatic pressure control module (20) is configured
g1) to receive the first electric braking request signal (S1) at an electric control input (97) of the pressure control module (20) and to generate an electronically controlled brake pressure (p_{VA}, p_{HA}, pₜᵣₐᵢₗₑᵣ) for the wheel brake actuators (3, 4) within the at least one electric service brake circuit in dependence on the first electric braking request signal (S1), and
g2) to receive the at least one pneumatic brake control pressure (p1, p2) at at least one pneumatic control input (95, 96) of the pressure control module (20) and to generate a brake pressure (P_{vA}, p_{HA}, pₜᵣₐᵢₗₑᵣ) for the wheel brake actuators (3, 4) depending on the at least one pneumatic brake control pressure (p1, p2) within the at least one pneumatic service brake circuit, and
g3) to feed the brake pressure (p_{VA}, p_{HA}, pₜᵣₐᵢₗₑᵣ) into the pneumatic wheel brake actuators (3, 4),
g4) the at least one electropneumatic pressure control module (20) comprises at least one electromagnetic backup valve which is connected to the pneumatic control input (95, 96) and which is configured and controlled such that it
g4a) retains the at least one pneumatic brake control pressure (p1, p2) when the at least one electric service brake circuit is intact or sufficiently energized, but
g4b) otherwise, if the at least one electric service brake circuit has a defect or is insufficiently energized, allows the at least one pneumatic brake control pressure (p1, p2) to pass through so that the at least one pressure control module (20) can generate the brake pressure (p_{VA}, p_{HA}, pₜᵣₐᵢₗₑᵣ) in dependence on the at least one pneumatic brake control pressure (p1, p2), **characterized in that**
h) the at least one electrically actuated actuator (18, 82) is controlled by the secondary electronic brake control device (41) in dependence on an assistance braking request signal (AS) automatically generated by a driver assistance system (93) and/or in dependence on the electric actuation signal (BS) such that, irrespective of a defect in the electric service brake circuit, the at least one pneumatic brake control pressure (p1, p2) is generated by the electrically actuated actuator (18, 82) in response to the assistance braking request signal (AS) and/or in response to the brake actuation signal (BS), and is fed into the at least one pneumatic control input (95, 96) of the at least one pressure control module (20), and/or wherein
i) the at least one electrically actuated actuator (18, 82) is controlled by the secondary electronic brake control device (41) such that the at least one pneumatic brake control pressure (p1, p2) is generated by the at least one electrically actuated actuator (18, 82) independently of a generation of the ignition or start signal for the prime mover of the vehicle and is fed into the at least one pneumatic control input (95, 96) of the at least one pressure control module (20).

2. Electropneumatic equipment according to claim 1, **characterized in that** the at least one actuator (18, 82) is controlled by the secondary electronic brake control device (41) such that in response to any assistance braking request signal (AS) and/or in response to any brake actuation signal (BS) which represents a braking request of which the absolute value is greater than the absolute value of a limit braking request (aₗᵢₘᵢₜ), the at least one pneumatic brake control pressure (p1, p2) is generated and fed into the at least one pneumatic control input (95, 96) of the pressure control module (20).

3. Electropneumatic equipment according to claim 2, **characterized in that** the limit braking request (aₗᵢₘᵢₜ) is zero or represents a non-zero deceleration.

4. Electropneumatic equipment according to any one of the preceding claims, **characterized in that** the service brake input device (18) is
a) an all-electric service brake input device (18), which only generates the electric actuation signal (BS) but no pneumatic brake control pressure, or
b) an electropneumatic service brake valve device, which in addition to the electric channel generates the at least one pneumatic brake control pressure (p1, p2) in at least one pneumatic channel.

5. Electropneumatic equipment according to claim 4, **characterized in that** the electropneumatic service brake valve device (18) is configured such that by an actuation of a service brake actuating member (94) due to a driver braking request, at least one control piston (85) of the service brake valve device (18) is loaded with a first actuation force (F₁) and the control piston (85) directly or indirectly controls at least one double-seat valve (88) of the service brake valve device (18) including an inlet seat and an outlet seat in order to generate the at least one pneumatic brake control pressure (p1, p2).

6. Electropneumatic equipment according to claim 5, **characterized in that** the at least one electrically actuated actuator (18, 82) comprises the service brake valve device (18) as well as means for generating a second actuation force (F₂), which acts in parallel with respect to the first actuation force (F₁) and in the same or opposite direction on the at least one control piston (85) of the service brake valve device (18).

7. Electropneumatic equipment according to claim 6, **characterized in that** the means for generating the second actuation force (F₂) include an electrically controlled, in particular electric, electrohydraulic or electropneumatic force generator (82).

8. Electropneumatic equipment according to claim 7, **characterized in that** the electropneumatic force generator (82) comprises a solenoid valve device which is fed from a compressed air supply (10) with supply compressed air under supply pressure (10), and which generates a pneumatic control pressure (p_{St}) based on the supply compressed air at the control piston (85) of the service brake valve device (18), on which pressure the second actuation force (F₂) is based.

9. Electropneumatic equipment according to any one of claims 5 to 8, **characterized in that** the electropneumatic service brake valve device (18) is configured to generate a first pneumatic brake control pressure (p1) for a first pneumatic service brake circuit and a second pneumatic brake control pressure (p2) for a second pneumatic service brake circuit, with the circuits being kept separate.

10. Electropneumatic equipment according to any one of the preceding claims, **characterized in that** the electropneumatic service brake device (80) comprises at least one first brake circuit for a first axle (VA) of the vehicle and at least one second brake circuit for a second axle (HA) of the vehicle, wherein it is configured such that a first brake pressure (p_{VA}) for the first brake circuit and a second brake pressure (p_{HA}) for the second brake circuit are individually generated, wherein the pressure control module (20) is configured as a 2-channel pressure control module and generates the first brake pressure (p_{VA}) based on the first pneumatic brake control pressure (p1) and the second brake pressure (p_{HA}) based on the second pneumatic brake control pressure (p2).

11. Electropneumatic equipment according to claim 9 or 10, **characterized in that** the electropneumatic service brake device (80) comprises a trailer control module (24) which is configured as a pressure control module and which is electrically controlled at its electric control input by the first electric braking request signal (S1), and which is pneumatically controlled at its pneumatic control input by the first brake pressure (p_{VA}) or the second brake pressure (p_{HA}).

12. Electropneumatic equipment according to any one of the preceding claims, **characterized in that** the primary electronic brake control device (40), the integrated electronic control unit of the at least one pressure control module (20), and the brake value transmitter (86) of the service brake input device (18) are connected to a primary control connection (SV1) which is separate and independent from a secondary control connection (SV2), to which the secondary electronic brake control device (41) and the at least one electrically actuated actuator (18, 82) are connected.

13. Electropneumatic equipment according to any one of the preceding claims, **characterized in that** the driver assistance system (93) comprises an autopilot device, an emergency brake assistant, or a vehicle dynamics control system (ESP).

14. Electropneumatic equipment according to any one of the preceding claims, **characterized in that** the secondary electronic brake control device (41) controls the at least one electrically actuated actuator (18, 82) such that the at least one pneumatic brake control pressure (p1, p2) is generated depending on at least the following variables and is fed into the at least one pneumatic control input (95, 96) of the pressure control module (20):
a) a mass ratio between the vehicle and the trailer,
b) the axle loads of at least two axles (VA, HA) of the vehicle,
c) a number of pneumatic channels of the service brake valve device (18).

15. Electropneumatic equipment according to any one of the preceding claims, **characterized in that** the primary electronic brake control device (40) generates the first electric braking request signal (S1) depending on the electric actuation signal (BS) and/or depending on the assistance braking request signal (AS).

16. Electropneumatic equipment according to any one of the preceding claims, **characterized in that** electrically controllable pressure control valves (28) are provided by the primary electronic brake control device (40) and/or by the secondary electronic brake control device (40), and can be used to individually control the brake pressure (p_{vA}, P_{HA}) in a pneumatic wheel brake actuator (4).

17. Electropneumatic equipment according to any one of the preceding claims, **characterized in that**
a) normal operation is provided, in which the electric service brake circuit is subject to open-loop/closed-loop control, in particular exclusively by the primary brake control device (40), and/or **in that**
b) a first redundancy level is provided, in which the at least one pneumatic service brake circuit is controlled by the at least one pneumatic brake control pressure (p1, p2) generated by the electrically actuated actuator (18, 82), and/or **in that**
c) a second redundancy level is provided, in which the at least one pneumatic service brake circuit is pneumatically controlled, in particular exclusively by the at least one pneumatic brake control pressure (p1, p2) generated by actuation of a service brake actuating member (94).

18. Electropneumatic equipment according to any one of the preceding claims, **characterized in that** within the electric service brake circuit an electric primary supply source (52) is provided, which supplies electric power to the primary electronic brake control device (40).

19. Electropneumatic equipment according to claim 18, **characterized in that** the electric primary supply source (52) is independent of a secondary supply source (58) which supplies electric power to the secondary electronic brake control device (41).

20. Electropneumatic equipment according to claims 7 and 19, **characterized in that** the secondary supply source (58) supplies electric power to at least a portion of the force generator (82).

21. Electropneumatic equipment according to any one of the preceding claims, **characterized in that** the service brake input device (18) has a service brake actuating member (94) and, within the at least one electric service brake circuit, at least one electric channel with at least one electric brake value transmitter (86) which is actuatable by the service brake actuating member (94) and generates the electric actuation signal (BS) in dependence on an actuation of the service brake actuating member (94).

22. Electropneumatic equipment according to any one of the preceding claims, **characterized in that** the secondary electronic brake control device (41) controls the at least one electrically actuated actuator (18, 82) by the second electric braking request signal (S2) depending on an assistance braking request signal (AS) automatically generated by a driver assistance system (93) and/or depending on the electric actuation signal (BS) and/or independently of the ignition or start signal.

23. Vehicle having a prime mover operable by an ignition or start signal, comprising electropneumatic equipment according to any one of the preceding claims.

24. Vehicle according to claim 23, **characterized in that** it is configured as a towing vehicle for towing a braked trailer.

## Revendications

1. Équipement électropneumatique d'un véhicule avec une machine d'entraînement pouvant être mise en service par un signal d'allumage ou de démarrage, comprenant un appareil de freinage de service électropneumatique (80), dans lequel l'appareil de freinage de service électropneumatique (80) présente au moins :
a) des actionneurs pneumatiques de freinage de roue (4),
b) au moins un circuit électrique de freinage de service,
c) au moins un circuit pneumatique de freinage de service,
d) un appareil d'entrée de freinage de service (18) au moins électrique qui génère un signal d'actionnement électrique (BS) à l'intérieur de l'au moins un circuit électrique de freinage de service,
e) à l'intérieur du circuit électrique de freinage de service, un appareil de commande de freinage électronique primaire (40), qui, en fonction du signal d'actionnement électrique (BS), génère un premier signal électrique de demande de freinage (S1) représentant une pression de freinage de consigne,
f) un appareil de commande de freinage électronique secondaire (41) qui commande au moins un actionneur (18, 82) actionné électriquement par un second signal électrique de demande de freinage (S2), qui est conçu pour générer au moins une pression pneumatique de commande de freinage (p1, p2) sur la base du second signal électrique de demande de freinage (S2),
g) au moins un module régulateur de pression électropneumatique (20) avec un dispositif de commande électronique intégré en tant qu'élément de l'au moins un circuit électrique de freinage de service, dans lequel le au moins un module régulateur de pression électropneumatique (20) est conçu
g1) pour recevoir au niveau d'une entrée de commande électrique (97) du module régulateur de pression (20) le premier signal électrique de demande de freinage (S1) et, en fonction du premier signal électrique de demande de freinage (S1), générer à l'intérieur de l'au moins un circuit électrique de freinage de service une pression de freinage régulée électroniquement (p_{VA}, p_{HA}, p_{remorque}) pour les actionneurs de freinage de roue (3, 4), et
g2) pour recevoir au niveau d'au moins une entrée de commande pneumatique (95, 96) du module régulateur de pression (20) la au moins une pression pneumatique de commande de freinage (p1, p2) et, en fonction de la au moins une pression pneumatique de commande de freinage (p1, p2) à l'intérieur de l'au moins un circuit pneumatique de freinage de service, une pression de freinage (p_{vA}, p_{HA}, p_{remorque}) pour les actionneurs de freinage de roue (3, 4), et
g3) pour générer la pression de freinage (p_{VA}, p_{HA}, p_{remorque}) dans les actionneurs pneumatiques de freinage de roue (3, 4),
g4) le au moins un module régulateur de pression électropneumatique (20) présente au moins une soupape de secours électromagnétique qui est connectée à l'entrée de commande pneumatique (95, 96) et qui est conçue et commandée de manière à
g4a) contenir la au moins une pression pneumatique de commande de freinage (p1, p2) lorsque le au moins un circuit électrique de freinage de service est intact ou suffisamment alimenté, mais
g4b) dans le cas contraire, lorsque le au moins un circuit électrique de freinage de service présente un défaut ou est insuffisamment alimenté, transmettre la au moins une pression pneumatique de commande de freinage (p1, p2) pour que le au moins un module régulateur de pression (20) génère la pression de freinage (p_{VA}, p_{HA} p_{remorque}) en fonction de la au moins une pression pneumatique de commande de freinage (p1, p2), **caractérisé en ce que**
h) le au moins un actionneur (18, 82) actionné électriquement est commandé par l'appareil de commande de freinage électronique secondaire (41) en fonction d'un signal de demande de freinage d'assistance (AS) généré automatiquement par un système d'aide à la conduite (93) et/ou en fonction du signal d'actionnement électrique (BS) de sorte que, indépendamment d'un défaut du circuit électrique de freinage de service, la au moins une pression pneumatique de commande de freinage (p1, p2) est générée par l'actionneur (18, 82) actionné électriquement en réponse au signal de demande de freinage d'assistance (AS) et/ou au signal d'actionnement de freinage (BS) et est injectée dans la au moins une entrée de commande pneumatique (95, 96) de l'au moins un module régulateur de pression (20), et/ou dans lequel
i) le au moins un actionneur (18, 82) actionné électriquement est commandé par l'appareil de commande de freinage électronique secondaire (41) de sorte que, indépendamment d'une génération du signal d'allumage ou de démarrage pour la machine d'entraînement du véhicule, la au moins une pression pneumatique de commande de freinage (p1, p2) est générée par le au moins un actionneur (18, 82) actionné électriquement et est injectée dans la au moins une entrée de commande pneumatique (95, 96) de l'au moins un module régulateur de pression (20).

2. Équipement électropneumatique selon la revendication 1, **caractérisé en ce que** le au moins un actionneur (18, 82) est commandé par l'appareil de commande de freinage électronique secondaire (41) de sorte que, en réponse à chaque signal de demande de freinage d'assistance (AS) et/ou à chaque signal d'actionnement de freinage (BS) qui représente une demande de freinage dont la valeur est supérieure à la valeur d'une demande de freinage limite (aₗᵢₘᵢₜₑ), la au moins une pression pneumatique de commande de freinage (p1, p2) est générée et injectée dans la au moins une entrée de commande pneumatique (95, 96) du module régulateur de pression (20).

3. Équipement électropneumatique selon la revendication 2, **caractérisé en ce que** la demande de freinage limite (aₗᵢₘᵢₜₑ) est nulle ou représente un ralentissement différent de nul.

4. Équipement électropneumatique selon l'une quelconque des revendications précédentes, **caractérisé en ce que** l'appareil d'entrée de freinage de service (18)
a) est un appareil d'entrée de freinage de service (18) purement électrique qui génère uniquement le signal d'actionnement électrique (BS), mais aucune pression pneumatique de commande de freinage, ou
b) est un appareil de soupape de freinage de service électropneumatique qui génère, en plus du canal électrique, dans au moins un canal pneumatique, la au moins une pression pneumatique de commande de freinage (p1, p2).

5. Équipement électropneumatique selon la revendication 4, **caractérisé en ce que** l'appareil de soupape de freinage de service électropneumatique (18) est conçu **en ce que**, par un actionnement d'un organe d'actionnement de freinage de service (94) en raison d'une demande de freinage du conducteur, au moins un piston de commande (85) de l'appareil de soupape de freinage de service (18) est chargé avec une première force d'actionnement (F₁), et le piston de commande (85) commande directement ou indirectement au moins une soupape double siège (88) contenant un siège d'entrée et un siège de sortie de l'appareil de soupape de freinage de service (18) pour générer la au moins une pression pneumatique de commande de freinage (p1, p2).

6. Équipement électropneumatique selon la revendication 5, **caractérisé en ce que** le au moins un actionneur (18, 82) actionné électriquement comprend l'appareil de soupape de freinage de service (18) ainsi que des moyens de génération d'une seconde force d'actionnement (F₂) qui, par rapport à la première force d'actionnement (F₁), agit parallèlement et dans le même sens ou en sens inverse sur le au moins un piston de commande (85) de l'appareil de soupape de freinage de service (18).

7. Équipement électropneumatique selon la revendication 6, **caractérisé en ce que** les moyens de génération de la seconde force d'actionnement (F₂) contiennent un générateur de force (82) à commande électrique, en particulier électrique, électrohydraulique ou électropneumatique.

8. Équipement électropneumatique selon la revendication 7, **caractérisé en ce que** le générateur de force électropneumatique (82) comprend un appareil de soupape magnétique alimenté par une réserve d'air comprimé (10) avec de l'air comprimé de réserve sous pression de réserve (10), appareil qui génère, sur la base de l'air comprimé de réserve, une pression de commande pneumatique (p_{St}) au niveau du piston de commande (85) de l'appareil de soupape de freinage de service (18), pression sur laquelle la seconde force d'actionnement (F₂) est basée.

9. Équipement électropneumatique selon l'une quelconque des revendications 5 à 8, **caractérisé en ce que** l'appareil de soupape de freinage de service électropneumatique (18) est conçu pour générer, de manière séparée par circuit, une première pression pneumatique de commande de freinage (p1) pour un premier circuit pneumatique de freinage de service et une seconde pression pneumatique de commande de freinage (p2) pour un second circuit pneumatique de freinage de service.

10. Équipement électropneumatique selon l'une quelconque des revendications précédentes, **caractérisé en ce que** l'appareil de freinage de service électropneumatique (80) comprend au moins un premier circuit de freinage pour un premier essieu (VA) du véhicule et au moins un second circuit de freinage pour un second essieu (HA) du véhicule, dans lequel il est conçu pour qu'une première pression de freinage (p_{VA}) pour le premier circuit de freinage et une seconde pression de freinage (p_{HA}) pour le second circuit de freinage sont générées individuellement, dans lequel le module régulateur de pression (20) est conçu en tant que module régulateur de pression à 2 canaux et génère la première pression de freinage (p_{VA}) sur la base de la première pression pneumatique de commande de freinage (p1) et la seconde pression de freinage (p_{HA}) sur la base de la seconde pression pneumatique de commande de freinage (p2).

11. Équipement électropneumatique selon la revendication 9 ou 10, **caractérisé en ce que** l'appareil de freinage de service électropneumatique (80) comprend un module de commande de remorque (24) qui est conçu en tant que module régulateur de pression et qui est commandé électriquement au niveau de son entrée de commande électrique par l'intermédiaire du premier signal électrique de demande de freinage (S1) et qui est commandé pneumatiquement au niveau de son entrée de commande pneumatique par l'intermédiaire de la première pression de freinage (p_{VA}) ou de la seconde pression de freinage (p_{HA}).

12. Équipement électropneumatique selon l'une quelconque des revendications précédentes, **caractérisé en ce que** l'appareil de commande de freinage électronique primaire (40), le dispositif de commande électronique intégré de l'au moins un module régulateur de pression (20) et le transmetteur de valeur de freinage (86) de l'appareil d'entrée de freinage de service (18) sont raccordés à une connexion de commande primaire (SV1) qui est séparée et indépendante d'une connexion de commande secondaire (SV2) à laquelle l'appareil de commande de freinage électronique secondaire (41) et le au moins un actionneur (18, 82) actionné électriquement sont raccordés.

13. Équipement électropneumatique selon l'une quelconque des revendications précédentes, **caractérisé en ce que** le système d'assistance à la conduite(93) comprend un appareil de pilotage automatique, un assistant de freinage d'urgence ou un dispositif de régulation de dynamique de conduite (ESP).

14. Équipement électropneumatique selon l'une quelconque des revendications précédentes, **caractérisé en ce que** l'appareil de commande de freinage électronique secondaire (41) commande le au moins un actionneur (18, 82) actionné électriquement de sorte que la au moins une pression pneumatique de commande de freinage (p1, p2) est générée en fonction d'au moins les grandeurs suivantes et injectée dans la au moins une entrée de commande pneumatique (95, 96) du module régulateur de pression (20) :
a) un rapport de masse entre le véhicule et la remorque,
b) les charges d'essieu d'au moins deux essieux (VA, HA) du véhicule,
c) un certain nombre de canaux pneumatiques de l'appareil de soupape de freinage de service (18).

15. Équipement électropneumatique selon l'une quelconque des revendications précédentes, **caractérisé en ce que** l'appareil de commande de freinage électronique primaire (40) génère le premier signal électrique de demande de freinage (S1) en fonction du signal d'actionnement électrique (BS) et/ou en fonction du signal de demande de freinage d'assistance (AS).

16. Équipement électropneumatique selon l'une quelconque des revendications précédentes, **caractérisé en ce que** des soupapes de commande de pression (28) pouvant être commandées électriquement par l'appareil de commande de freinage électronique primaire (40) et/ou par l'appareil de commande de freinage électronique secondaire (40) sont prévues, par l'intermédiaire desquelles la pression de freinage (p_{vA}, P_{HA}) peut être commandée individuellement dans un actionneur pneumatique de freinage de roue (4).

17. Équipement électropneumatique selon l'une quelconque des revendications précédentes, **caractérisé en ce que**
a) un fonctionnement normal est prévu, dans lequel une commande/régulation du circuit électrique de freinage de service est effectuée en particulier exclusivement par l'intermédiaire de l'appareil de commande de freinage primaire (40), et/ou **en ce que**
b) un premier niveau de redondance est prévu, dans lequel une commande de l'au moins un circuit pneumatique de freinage de service est effectuée par l'intermédiaire de la au moins une pression pneumatique de commande de freinage (p1, p2) générée par l'actionneur (18, 82) actionné électriquement, et/ou **en ce que**
c) un second niveau de redondance est prévu, dans lequel une commande pneumatique de l'au moins un circuit pneumatique de freinage de service est effectuée en particulier exclusivement par l'intermédiaire de la au moins une pression pneumatique de commande de freinage (p1, p2) générée par un actionnement d'un organe d'actionnement de freinage de service (94).

18. Équipement électropneumatique selon l'une quelconque des revendications précédentes, **caractérisé en ce que,** à l'intérieur du circuit électrique de freinage de service, une source d'alimentation primaire électrique (52) est prévue, qui alimente en énergie électrique l'appareil de commande de freinage électronique primaire (40).

19. Équipement électropneumatique selon la revendication 18, **caractérisé en ce que** la source d'alimentation primaire électrique (52) est indépendante d'une source d'alimentation secondaire (58) qui alimente en énergie électrique l'appareil de commande de freinage électronique secondaire (41).

20. Équipement électropneumatique selon les revendications 7 et 19, **caractérisé en ce que** la source d'alimentation secondaire (58) alimente en énergie électrique au moins une partie du générateur de force (82).

21. Équipement électropneumatique selon l'une quelconque des revendications précédentes, **caractérisé en ce que** l'appareil d'entrée de freinage de service (18) présente un organe d'actionnement de freinage de service (94) et, à l'intérieur de l'au moins un circuit électrique de freinage de service, au moins un canal électrique avec au moins un générateur de valeur de freinage électrique (86) pouvant être actionné par l'organe d'actionnement de freinage de service (94), générateur qui génère le signal d'actionnement électrique (BS) en fonction d'un actionnement de l'organe d'actionnement de freinage de service (94).

22. Équipement électropneumatique selon l'une quelconque des revendications précédentes, **caractérisé en ce que** l'appareil de commande de freinage électronique secondaire (41) commande, en fonction d'un signal de demande de freinage d'assistance (AS) généré automatiquement par un système d'assistance à la conduite (93) et/ou en fonction du signal d'actionnement électrique (BS) et/ou indépendamment du signal d'allumage ou de démarrage, le au moins un actionneur (18, 82) actionné électriquement par l'intermédiaire du second signal électrique de demande de freinage (S2).

23. Véhicule avec une machine d'entraînement pouvant être mise en service par un signal d'allumage ou de démarrage, comprenant un équipement électropneumatique selon l'une quelconque des revendications précédentes.

24. Véhicule selon la revendication 23, **caractérisé en ce qu'il** est conçu en tant que véhicule tracteur pour tirer une remorque freinée.
